(19) Europäisches Patentamt
European Patent Office
Office européen des brevets

(11) **EP 3 069 187 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **14796524.8**

(22) Anmeldetag: **13.11.2014**

(51) Int Cl.:
**G02B 27/00** *(2006.01)*    **G02B 21/02** *(2006.01)*
**G02B 21/00** *(2006.01)*    *G02B 21/36* *(2006.01)*

(86) Internationale Anmeldenummer:
**PCT/EP2014/074487**

(87) Internationale Veröffentlichungsnummer:
**WO 2015/071361 (21.05.2015 Gazette 2015/20)**

(54) **ANORDNUNG ZUR LICHTBLATTMIKROSKOPIE**

ARRANGEMENT FOR LIGHT SHEET MICROSCOPY

SYSTÈME DE MICROSCOPIE À FEUILLE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013112595**

(43) Veröffentlichungstag der Anmeldung:
**21.09.2016 Patentblatt 2016/38**

(73) Patentinhaber: **Carl Zeiss Microscopy GmbH**
**07745 Jena (DE)**

(72) Erfinder: **PRETORIUS, Marco**
**73447 Oberkochen (DE)**

(74) Vertreter: **Gleim Petri Oehmke Patent- und Rechtsanwaltspartnerschaft mbB**
**Neugasse 13**
**07743 Jena (DE)**

(56) Entgegenhaltungen:
EP-A1- 2 437 117        WO-A1-02/10833
WO-A1-2015/004107       WO-A2-2012/122027
DE-B3-102012 101 262    US-A1- 2004 173 760

EP 3 069 187 B1

**Beschreibung**

Die Erfindung betrifft eine Vorrichtung zur Lichtblattmikroskopie. Eine solche Vorrichtung umfasst eine Beleuchtungsoptik mit einem Beleuchtungsobjektiv zur Beleuchtung einer auf einem Probenträger in einem Medium befindlichen Probe über einen Beleuchtungsstrahlengang mit einem Lichtblatt. Dabei liegen die optische Achse des Beleuchtungsobjektivs und das Lichtblatt in einer Ebene, die mit der Normalen einer ebenen Bezugsfläche, hinsichtlich welcher der Probenträger -gelegentlich auch als Probengefäß mit seitlichen Wänden zur Aufnahme von Flüssigkeiten ausgestaltet - ausgerichtet ist, einen von Null verschiedenen Beleuchtungswinkel β einschließt. Außerdem umfasst die Vorrichtung eine Detektionsoptik mit einem Detektionsobjektiv in einem Detektionsstrahlengang. Auch hier schließt die optische Achse des Detektionsobjektivs mit der Normalen der Bezugsfläche einen von Null verschiedenen Detektionswinkel δ ein. Darüber hinaus umfasst die Vorrichtung ein Trennschichtsystem mit mindestens einer Schicht aus einem vorgegebenen Material mit vorgegebener Dicke, welche das Medium von dem Beleuchtungsobjektiv und dem Detektionsobjektiv trennt. Das Trennschichtsystem ist dabei mit einer Grundfläche parallel zur Bezugsfläche ausgerichtet und steht mit dieser Grundfläche zumindest in dem für das Beleuchtungs- und das Detektionsobjektiv für Beleuchtung bzw. Detektion zugänglichen Bereich mit dem Medium in Kontakt. Bei dem Trennschichtsystem kann es sich im einfachsten Fall um eine Luftschicht handeln, welche die Objektive vom Medium trennt. Oft wird es sich bei dem Trennschichtsystem um den Boden des Probengefäßes handeln, wenn die Objektive darunter angeordnet sind, oder um eine entsprechende Abdeckplatte oder ein Deckglas mit jeweils einer Luftschicht, die den Boden bzw. das Deckglas vom Objektiv trennt. Sind die Objektive als Immersionsobjektive ausgestaltet, so befindet sich zwischen Deckglas bzw. Boden des Probengefäßes das Immersionsmedium anstelle von Luft. Schließlich umfasst die Vorrichtung auch ein Detektionskorrekturlinsensystem mit mindestens einer Detektionskorrekturlinse zur Verringerung von solchen Aberrationen, welche durch den schrägen Durchtritt von zu detektierendem Licht durch Grenzflächen des Trennschichtsystems entstehen. Üblicherweise sind Beleuchtungs- und Detektionsobjektiv zwei verschiedene Objektive, sie können aber auch als sogenanntes Doppelobjektiv ausgestaltet sein, wie es beispielsweise in der EP 0 866 993 B1 beschrieben ist. Beide Objektive sind dann in einer gemeinsamen Baueinheit zusammengefasst, die jeweiligen Optiken - d.h. Objektive mit zugehörigen Strahlengängen und darin angeordneten optischen Elementen - teilen sich dann einige Elemente.

Eine solche Vorrichtung wird insbesondere bei der Untersuchung von biologischen Proben eingesetzt, bei der die Beleuchtung der Proben mit einem Lichtblatt, dessen Ebene die optische Achse der Detektion in einem von Null verschiedenen Winkel schneidet, erfolgt. Üblicherweise schließt dabei das Lichtblatt mit der Detektionsrichtung, die in der Regel der optischen Achse des Detektionsobjektivs entspricht, einen rechten Winkel ein. Mit dieser auch als SPIM (*S*elective *P*lane *I*llumination *M*icroscopy) bezeichneten Technik lassen sich in relativ kurzer Zeit räumliche Aufnahmen auch dickerer Proben erstellen. Auf der Basis von optischen Schnitten kombiniert mit einer Relativbewegung in einer Richtung senkrecht zur Schnittebene ist eine bildliche, räumlich ausgedehnte Darstellung der Probe möglich.

Die SPIM-Technik wird bevorzugt in der Fluoreszenzmikroskopie eingesetzt, in diesem Zusammenhang wird sie auch als LSFM (*L*ight *S*heet *F*luorescence *M*icroscopy) bezeichnet. Die Probe wird in lateraler Richtung gleichmäßig ausgeleuchtet, in der Richtung senkrecht zum Lichtblatt ist dann eine selektive, d.h. mit geringer Schärfentiefe verbundene Abbildung möglich. Gegenüber anderen etablierten Verfahren wie der konfokalen Laser-Scanning-Mikroskopie oder der Zwei-Photonen-Mikroskopie weist die LSFM-Technik mehrere Vorzüge auf. Da die Detektion im Weitfeld erfolgen kann, lassen sich größere Probenbereiche erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Proben bei diesem Verfahren am geringsten, was unter anderem die Gefahr des Ausbleichens der Probe reduziert, da die Probe nur durch ein dünnes Lichtblatt in einem von Null verschiedenen Winkel zur Detektionsrichtung beleuchtet wird.

Dabei kann sowohl ein statisches Lichtblatt, welches beispielsweise mit Hilfe von Zylinderlinsen erzeugt wird, verwendet werden, als auch ein quasi-statisches Lichtblatt. Dieses kann erzeugt werden, indem die Probe mit einem Lichtstrahl schnell abgetastet wird. Die lichtblattartige Beleuchtung entsteht, indem der Lichtstrahl einer sehr schnellen Relativbewegung zu der beobachteten Probe unterworfen und dabei zeitlich aufeinanderfolgend mehrfach aneinander gereiht wird. Dabei wird die Integrationszeit der Kamera, auf deren Sensor die Probe letztendlich abgebildet wird, so gewählt, dass die Abtastung innerhalb der Integrationszeit abgeschlossen wird. Anstelle einer Kamera mit einem zweidimensionalen Sensorfeld kann auch ein Zeilensensor in Kombination mit einem erneuten Abtasten (*Rescan*) in der Detektionsoptik verwendet werden. Außerdem kann die Detektion auch konfokal erfolgen.

Die SPIM-Technik ist in der Literatur inzwischen vielfach beschrieben, so beispielsweise in der DE 102 57 423 A1 und der darauf aufbauenden WO 2004/053558 A1 oder in dem Übersichtsartikel "Selective Plane Illumination Microscopy Techniques in Developmental Biology" von J. Huisken et al., erschienen in der Zeitschrift Development, Bd. 336, Seite 63 im Jahr 2009.

Eine der Hauptanwendungen der Lichtblattmikroskopie liegt in der Bildgebung mittelgroßer Organismen mit einer Größe von einigen 100 μm bis hin zu wenigen mm. In der Regel werden diese Organismen in ein Agarose-Gel eingebettet, welches sich wiederum in einer Glaskapillare befindet. Die Glaskapillare wird in eine wassergefüllte Probenkammer eingebracht und die Probe ein Stück aus der Kapillare herausgedrückt. Die Probe in der Agarose wird dann mit einem Lichtblatt beleuchtet und die Fluoreszenz mit einem Detektionsobjektiv, das senkrecht zum Lichtblatt und damit auch senkrecht zur optischen Achse des Beleuchtungsobjektivs steht, auf eine Kamera abgebildet.

Diese Methode der Lichtblattmikroskopie weist jedoch einige Nachteile auf: Zum einen sind die zu untersuchenden Proben relativ groß, sie stammen aus der Entwicklungsbiologie. Ihre Präparation in speziellen Zylinderröhrchen, die mit Agarose-Gel gefüllt sind, ist aufwendig und stört die normalen Laborabläufe, sie ist nicht kompatibel zu Standard-Proben-Präparationen und zu Standard-Proben-Halterungen. Der unvermeidbare Brechungsindexunterschied zwischen dem Zylinderröhrchen aus Glas oder Kunststoff und dem Agarose-Gel führt außerdem zu optischen Aberrationen, die das Auflösungsvermögen beeinträchtigen können. Außerdem ist aufgrund der Probenpräparation und der Abmessungen der Probenkammer das Lichtblatt relativ dick und somit die erzielbare axiale Auflösung eingeschränkt.

Um diese Einschränkungen zumindest teilweise umgehen zu können, wurde in den letzten Jahren ein SPIM-Aufbau realisiert, bei dem das Beleuchtungsobjektiv und das Detektionsobjektiv senkrecht zueinander stehen und unter einem Winkel von jeweils 45° von oben auf die Probe gerichtet sind. Zieht man als Bezugsfläche beispielsweise die Ebene eines Tisches heran, auf dem das Probengefäß gelagert ist, oder eine andere, meist horizontale Ebene, so betragen der Beleuchtungswinkel $\beta$ und der Detektionswinkel $\delta$ jeweils 45°. Ein solcher Aufbau wird beispielsweise in der WO 2012/110488 A2 und in der WO 2012/122027 A2 beschrieben.

Bei solchen Aufbauten befindet sich die Probe beispielsweise auf dem Boden eines als Petrischale ausgestalteten Probengefäßes. Die Petrischale ist mit Wasser oder Nährlösung gefüllt, Beleuchtungsobjektiv und Detektionsobjektiv werden in die Flüssigkeit eingetaucht. Das Wasser übernimmt dabei auch die Funktion einer Immersionsflüssigkeit. Dieser Ansatz bietet den Vorteil einer höheren Auflösung in axialer Richtung, da ein dünneres Lichtblatt erzeugt werden kann. Aufgrund der höheren Auflösung können dann auch kleinere Proben untersucht werden, auch ist die Probenpräparation einfacher geworden, sie entspricht jedoch weiterhin nicht dem Standard, ebenso wenig werden für die Untersuchung von einzelnen Zellen in der Fluoreszenzmikroskopie Petrischalen verwendet. Diese muss relativ groß sein, damit die beiden Objektive in die Schale eingetaucht werden können, ohne an den Rand der Schale anzustoßen. Mikrotiterplatten - auch als *Multi-Well*-Platten bezeichnet - welche Standard in vielen Bereichen der Biologie sind und gerade auch bei der fluoreszenzmikroskopischen Analyse einzelner Zellen eingesetzt werden, können mit diesem Verfahren nicht verwendet werden, da die Objektive nicht in die sehr kleinen Vertiefungen, welche rasterförmig auf der Platte angeordnet sind, eintauchen können. Ein weiterer Nachteil besteht darin, dass mit diesem Aufbau eine Analyse einer Vielzahl von Proben in kurzer Zeit (*High-Throughput-Screening*) nicht ohne weiteres möglich ist, da die Objektive beim Wechseln der Probe gereinigt werden müssen, um Kontaminierungen der verschiedenen Proben zu vermeiden. Bei Vorrichtungen, wie sie im Stand der Technik bekannt sind, ist ferner zur Änderung der Fokuslage eine Relativverschiebung zwischen Probe und Objektiv erforderlich. Durch die entsprechende Bewegung können die zu untersuchenden Probenbestandteile aufschwimmen und schlimmstenfalls sogar komplett das Beobachtungsfeld verlassen.

Ein Weg zur Beseitigung dieser Nachteile liegt darin, auf der einen Seite die Konfiguration von $\beta = \delta = 45°$ beizubehalten, jedoch die Probe samt umgebendem Medium von der Umgebung abzukapseln. Eine Möglichkeit besteht darin, die beiden Objektive nicht von oben auf die Probe zu richten, sondern nach Art eines inversen Mikroskops von unten, wo Beleuchtung und Detektion durch den transparenten Boden des Probengefäßes erfolgen. Dieser transparente Gefäßboden - beispielsweise einer Petrischale oder eines Objektträgers - zusammen mit der Flüssigkeits- oder Luftschicht, die sich zwischen Boden und Objektiven befindet, bildet dann das Trennschichtsystem. Äquivalent kann die Detektion auch weiterhin von oben erfolgen, sofern das Probengefäß mittels eines transparenten Deckels abgedeckt ist, oder auch ohne eine solchen Deckel - in diesem Fall besteht das Trennschichtsystem nur aus einer Luftschicht, um die Abkapselung zu gewährleisten. Auf diese Weise können alle typischen Probengefäße, beispielsweise auch Mikrotiterplatten, Petrischalen und Objektträger benutzt werden. Insbesondere kann auch eine Kontaminierung der Proben bei einer Analyse mit hohem Durchsatz vermieden werden.

Dieser Vorteil wird jedoch mit einem weiteren, schwerwiegenden Nachteil erkauft, da es aufgrund der Verwendung des Trennschicht-Systems - beispielsweise des Deckglases oder des Gefäßbodens mit anschließender Luftschicht - schon bei geringen numerischen Aperturen von beispielsweise NA = 0,3 zu extremen Abbildungsfehlern wie sphärischer Aberation und Koma aufgrund des schrägen Durchgangs von zu detektierendem Licht oder Beleuchtungslicht durch das Trennschichtsystem mit seinen Grenzflächen kommt und somit eine korrekte Bildgebung bei Nutzung von rotationssymmetrischen Standardobjektiven nicht mehr möglich ist.

In der DE 10 2013 107 297.6 wurde zur Beseitigung dieser Nachteile vorgeschlagen, Korrekturmittel in Form von Korrekturlinsen oder Linsengruppen in das Beleuchtungsobjektiv und/oder in das Detektionsobjektiv zu integrieren. Als Korrekturlinsen werden dort u.a. Zylinderlinsen oder nicht axial angeordnete Linsen vorgeschlagen. Die Korrekturlinsen können dabei auch solche Elemente mit asphärischen Flächen oder mit Freiformflächen umfassen. Außerdem werden für den Objektträger Materialien verwendet, die annähernd den Brechungsindex des Mediums, in welchem sich die Probe befindet - beispielsweise Wasser oder eine Nährflüssigkeit - haben, wobei zur Beseitigung weiterer Fehler adaptive optische Elemente zur Manipulation der Phasenfronten des Beleuchtungs- und/oder des Detektionslichts vorgeschlagen werden. Konkrete Angaben, wie solche Korrekturmittel ausgestaltet werden können, werden jedoch nicht gemacht. Die vorgeschlagenen Korrekturlinsen sind dabei zudem im Objektiv erst hinter der Frontlinse angeordnet, was eine Nachrüstung bestehender Objektive erschwert.

In der US 2004/173760 A1 wird vorgeschlagen, zur Korrektur von Aberrationen ein Prisma zwischen der Probe und der Beleuchtungsoptik anzuordnen. In der WO 02/10833 A1 wird zur Korrektur von Aberrationen vorgeschlagen, dazu ausgelegte, jedoch nicht näher spezifizierte optische Hilfsmittel, in die Fokussierungsmittel zu integrieren. Ein anderer Weg wird in der WO 2015/004107 A1 beschritten, hier werden zur Vermeidung solcher Aberrationen, die durch schrägen Lichtdurchtritt verursacht werden, speziell geformte Probengefäße oder -träger verwendet.

Aufgabe der Erfindung ist es daher, die Abbildungsfehler, die beim schiefen Durchgang von Beleuchtungs- und Detektionslicht durch den Objektträger, den Boden des Probengefäßes oder ein Deckglas entstehen, durch ein möglichst einfaches Korrekturelement zu beseitigen, welches vorteilhaft auch die Weiterverwendung bereits vorhandener Objektive ermöglichen soll. Darüber hinaus sollen auch vorzugsweise sphärische Abberationen, die bei einer Fokussierung auf andere Objektebenen auftreten können, durch entsprechende Korrekturelemente ausgeglichen werden. Schließlich soll mit Hilfe der Korrekturelemente vorzugsweise ebenfalls erreicht werden, dass die dieselben Objektive für eine Vielzahl von Probengefäß- bzw. Deckglas- und Mediumskombinationen verwendbar sein soll.

Die grundlegende Aufgabe der Erfindung wird dadurch gelöst, dass die mindestens eine Detektionskorrekturlinse als Freiformlinse ausgestaltet ist, welche zwischen Detektionsobjektiv und Trennschichtsystem angeordnet ist. Die mindestens eine Detektionskorrekturlinse kann auch die Frontlinse des Detektionsobjektivs bilden. In jedem Fall ist eine Anordnung zwischen dem Korpus des bereits bekannten Objektivs und dem Trennschichtsystem möglich, so dass grundsätzlich eine Nachrüstung mit relativ wenig Aufwand, sieht man von der Gestaltung der Freiformlinse ab, ermöglicht wird. Dabei ist es auch möglich, die bereits vorhandene Frontlinse des Detektionsobjektivs ein- oder beidseitig mit einer Freiformfläche zu beaufschlagen.

Die freie Flächenform der mindestens einen Detektionskorrekturlinse wird dabei durch eine Gleichung der Form

$$z = \frac{(x^2 + y^2)/R}{1 + \sqrt{1 - (1+k) \cdot \frac{(x^2+y^2)}{R^2}}} + \sum_{m,n=0}^{\infty} C_{m,n} x^m y^n \qquad (1a)$$

beschrieben. k ist dabei die sogenannte konische Konstante, R bezeichnet den Radius einer gedachten Kegelschnittfläche am Scheitelpunkt dieser Fläche, d.h. den Abstand des Scheitelpunkts zum nächstgelegenen Brennpunkt. Dabei liegt sowohl der Scheitelpunkt als auch der Scheitelpunkt als auch die Brennpunkte der Kegelschnittfläche auf der optischen Achse.

Durch die Koordinaten x und y wird ein Punkt auf der Linsenoberfläche in einem Koordinatensystem mit der optischen Achse entlang der z-Richtung beschrieben. $x^2 + y^2$ bezeichnet somit den Abstand des Punktes zur optischen Achse. Die Funktion $z(x,y)$ bezeichnet den Abstand der Linsenoberfläche von einer lotrecht auf der optischen Achse im Scheitelpunkt der Kegelschnittfläche stehende Ebene beim Koordinatenpaar $(x, y)$. $c_{m,n}$ bezeichnet die Koeffizienten eines Polynoms in x und y. Die Koeffizienten $c_{m,n}$, die konische Konstante k und der Radius R werden iterativ bestimmt, wobei nur solche Koeffizienten von Null verschieden sind, die eine gerade Potenz in der x-Koordinate aufweisen. Die z-Achse bezeichnet die primäre optische Achse des Objektivs.

Dabei hat sich gezeigt, dass die beste Position für die Korrektur der durch den schrägen Durchtritt durch das Trennschichtsystem hervorgerufenen Abbildungsfehler im vorderen Teil des Detektionsobjektivs oder vor dem Detektionsobjektiv liegt. Insbesondere kann auch die objektseitig gelegene erste Linse des Detektionsobjektivs mit einer oder zwei solcher Freiformflächen beaufschlagt werden. Das schräg durchtretene Trennschichtsystem erzeugt als führende Bildfehler zunächst rotationssymmetrische Bildfehler, wie Defokussierung und sphärische Aberration. Diese lassen sich jedoch meist bereits durch die üblichen rotationssymmetrischen Linsen im Objektiv oder durch deren Luftabstände korrigieren. Außerdem entstehen auch Achs-Koma und Achs-Astigmatismus sowie Bildfehler höherer Ordnungen, welche jedoch durch die beschriebenen Maßnahmen nicht korrigiert werden können. Diese können jedoch durch eine einzige Freiformlinse praktisch vollständig korrigiert werden, wenn sowohl die Vorder- als auch die Rückseite der Linse von geeignet gewählten Freiformflächen gebildet werden. Die z-Achse ist dabei die primäre optische Achse des Objektivs, d.h. die optische Achse der rotationssymmetrischen Linsen des Objektivs ohne die Freiformelemente, da strenggenommen das Objektiv mit den unsymmetrischen Freiformflächen keine optische Achse mehr besitzt.

In einer bevorzugten Ausgestaltung weist das Detektionsobjektiv außerdem eine Detektionsfokussierungseinrichtung zur Innenfokussierung und zur gleichzeitigen Korrektur von bei Fokusänderung auftretenden sphärischen Aberrationen auf. Auf diese Weise lassen sich die sphärischen Aberrationen, die insbesondere bei Objektiven mit hoher numerischer Apertur die Bildgüte des Objektivs sehr stark beeinträchtigen können, korrigieren. Über den gesamten Einstellbereich bleibt somit eine hohe, beugungsbegrenzte Bildgüte erhalten. Dadurch, dass die Detektionsfokussierungseinrichtung zur Innenfokussierung ausgelegt ist, wird zudem eine Relativverschiebung von Probe und Objektiv vermieden, was den Aufbau der gesamten Vorrichtung zur Lichtblattmikroskopie erleichtert, da Objektiv und Tisch bzw.

Probengefäß nicht mehr relativ gegeneinander verschoben werden müssen. Bevorzugt beträgt die numerische Apertur des Detektionsobjektivs dabei mindestens 0,8, besonders bevorzugt mindestens 1.0. Mit einer solchen Detektionsfokussierungseinrichtung beim Detektionsobjektiv wird es möglich, eine beliebige Ebene innerhalb eines objektseitigen Probenvolumens von mindestens 100 $\mu$m x 100 $\mu$m x 100 $\mu$m beugungsbegrenzt abzubilden.

In einer weiteren, besonders bevorzugten Ausführung umfasst die Detektionsfokussiereinrichtung mindestens ein erstes, im Strahlengang angeordnetes oder in diesen einbringbares adaptives optisches Detektionsfokussierelement zur Innenfokussierung bei gleichzeitiger Korrektur von bei Fokusänderung auftretenden sphärischen Aberrationen, sofern letztere noch nicht durch die Linsen und deren Anordnung im Objektiv selbst korrigiert werden, oder in Ergänzung zu diesen Grundkorrekturen.

Während die Detektionskorrekturlinse für eine spezielle Konfiguration von Medium, Trennschichtmaterial und Trennschichtdicke die Abberationen vollständig korrigiert, so dient das adaptive optische Detektionsfokussierelement der Anpassung an andere Fokuslagen. Die Detektionskorrekturlinse ist dabei so ausgestaltet, dass sie den Effekt des schräg zur optischen Achse des Objektivs angeordneten Deckglases kompensiert, so dass hinter dieser Linse näherungsweise wieder rotationssymmetrische Verhältnisse vorherrschen. Das adaptive optische Detektionsfokussierelement muss nur die Defokussierung und die sphärischen Aberrationen ausgleichen, die bei der Fokussierung auf andere Probentiefen eine Rolle spielen.

In einer weiteren bevorzugten Ausgestaltung weist das Detektionsobjektiv eine der Detektionskorrekturlinse nachgeordnete erste Detektionslinsengruppe auf, welche ein objektseitiges Bildfeld ins Unendliche abbildet, es weist darüber hinaus eine zweite Detektionslinsengruppe auf, welche bevorzugt afokal ausgebildet ist. Dabei ist das erste adaptive optische Element zwischen erster und zweiter Detektionslinsengruppe angeordnet. Bevorzugt befindet sich dabei hinter der ersten Detektionslinsengruppe die Aperturblende des Systems, welche dann von der ersten Detektionslinsengruppe ins Unendliche abgebildet wird, so dass objektseitig eine näherungsweise telezentrischer Strahlengang realisiert wird. In dem näherungsweise kollimierten Strahlengang hinter der ersten Detektionslinsengruppe ist außerdem das adaptive optische Detektionsfokussierelement angeordnet. Die zweite Detektionslinsengruppe ist im wesentlichen afokal ausgebildet, zusammen mit der ersten Detektionslinsengruppe bildet sie das Mikroskop-Grundobjektiv.

Ebenso wie für das Detektionsobjektiv lässt sich auch ein Beleuchtungskorrekturlinsensystem realisieren mit mindestens einer Beleuchtungskorrekturlinse mit der gleichen Wirkung wie die Detektionskorrekturlinse. Auch die Beleuchtungskorrekturlinse ist als Freiformlinse ausgestaltet, sowohl bei der Detektionskorrekturlinse als auch bei der Beleuchtungskorrekturlinse kann nicht nur eine Seite als Freiformfläche ausgestaltet sein, es können auch beide Seiten der Linse als Freiformflächen ausgestaltet sein. Auch im Beleuchtungsobjektiv ist bevorzugt eine Beleuchtungsfokussierungseinrichtung zur Innenfokussierung angeordnet, sowie mindestens ein adaptives optisches Beleuchtungsfokussierelement, welches die gleiche Funktion wie das mindestens eine adaptive optische Detektionsfokussierelement im Detektionsobjektiv hat. Gegenüber der numerischen Apertur des Detektionsobjektivs ist die des Beleuchtungsobjektivs wesentlich kleiner, sie liegt in der Regel nicht höher als NA=0,5. Die Anforderungen an die Wellenfrontgüte sind daher bei dem Beleuchtungsobjektiv nicht so hoch wie beim Detektionsobjektiv, was die Anforderungen an die Korrekturelemente senkt.

In einer besonders bevorzugten Ausgestaltung sind das mindestens eine adaptive optische Detektionsfokussierelement und das mindestens eine adaptive optische Beleuchtungsfokussierelement jeweils als Wellenfrontmanipulatoren ausgebildet, wobei jeder der Wellenfrontmanipulatoren bevorzugt zwei lateral zur optischen Achse gegeneinander bewegliche Freiformflächen umfasst. Ein solcher Wellenfrontmanipulator wird beispielweise in der DE 10 2012 101 262 B3 beschrieben, deren Offenbarung hier explizit vollumfänglich mit einbezogen wird, und auf welche insbesondere bezüglich verschiedener Ausgestaltungsmöglichkeiten für einen Wellenfrontmanipulator verwiesen wird.

Während für die Freiformflächen auf Linsen die oben erwähnte Formel (1a) Anwendung findet, können die Freiformflächen des Wellenfront-Manipulators als reine Polynomentwicklung dargestellt werden, da hier keine Grundkrümmung zu berücksichtigen ist. Explizit kann die Formel

$$z = \sum_{m,n=0}^{\infty} C_{m,n} x^m y^n \qquad (1b)$$

zur Bestimmung der - beiden meist identischen .Freiformflächen verwendet werden. Dabei sind nur diejenigen Polynomterme in n und m von Null verschieden, die eine ungerade Potenz der zur Verschiebungsrichtung parallelen Koordinate (entweder x oder y) und eine gerade Potenz der zur Verschiebungsrichtung senkrechten Koordinaten (entweder y oder x) aufweisen. Für die weiteren Ausführungen wird ohne Beschränkung der Allgemeinheit davon ausgegangen, dass die Verschiebungsrichtung zur y-Achse korrespondiert.

In der einfachsten Ausführungsform umfasst der Wellenfrontmanipulator genau zwei Freiformelemente, welche transversal zur optischen Systemachse verschoben werden: das eine Element um die Strecke s entlang der positiven y-Richtung, das andere entgegengesetzt gleichzeitig um die Strecke s in die negative y-Richtung. Die beiden Freiformelemente werden also genau gegenläufig und um gleiche Beträge relativ zueinander verschoben. Beide Freiformelemente bestehen im einfachsten Fall aus einer planen Seite und einer Freiformfläche. Die beiden Freiformflächen der Elemente des Wellenfrontmanipulators sind im Regelfall identisch, so dass sich die beiden Freiformelemente in einer Nullposition exakt zu einer planparallelen Platte komplementär ergänzen. Abweichungen davon sind möglich, um nichtparaxiale Effekte zu berücksichtigen.

Die Profilfunktion der Freiformelemente lässt sich durch eine Funktion beschreiben, die in der Richtung parallel zur Verschiebungsrichtung der Elemente durch eine Stammfunktion - das erste Integral - der gewünschten Wellenfrontänderung und in der Richtung senkrecht dazu durch eine zu der gewünschten Wellenfrontänderungswirkung proportionalen Funktion gegeben ist.

Eine reine Defokussierungswirkung lässt sich beispielsweise erreichen, wenn die Freiformfläche durch ein Polynom dritter Ordnung,

$$z(x, y) = k \cdot (x^2 \cdot y + \frac{y^3}{3}) \qquad (2)$$

beschrieben wird, wobei angenommen wurde, dass die laterale Verschiebung der Elemente entlang der y-Achse erfolgt. Der Parameter k skaliert dabei die Profiltiefe und legt auf diese Weise die erzielbare Brechkraftänderung pro Einheit des lateralen Verschiebungsweges s fest.

Ein Wellenfrontmanipulator zur Erzeugung von primärer sphärischer Aberration lässt sich beispielsweise durch die Profilfunktion

$$z(x, y) = k \cdot (y \cdot x^4 + \frac{2}{3} \cdot (x^2 \cdot y^3) + \frac{y^5}{5}) \qquad (3)$$

beschreiben. Die Freiformelemente können auch zur Beeinflussung anderer Wellenfrontfehler höherer Ordnung ausgelegt sein. Auch können mehrere Wellenfrontmanipulatoren verschiedener Art hintereinander gekoppelt werden, um so verschiedene Fehler sukzessive zu eliminieren. Für weitere Einzelheiten wird auf die bereits genannte DE 10 2012 101 262 B3 verwiesen.

In einer bevorzugten Ausgestaltung eines Wellenfrontmanipulators ist zwischen seinen gegeneinander beweglichen Freiformflächen ein Immersionsmedium eingebracht. Auf diese Weise ist es möglich, eine vorgegebene Wellenlängenabhängigkeit der Wellenfrontänderung durch den Manipulator einzustellen, insbesondere beispielsweise eine achromatische Wirkung. Für Einzelheiten, die Anpassung eines Immersionsmediums zwischen den Freiformelementen betreffend, wird abermals auf die DE 10 2012 101 262 B3 verwiesen, deren Offenbarungsgehalt hier vollständig eingeschlossen wird.

Ist zwischen die gegeneinander beweglichen Freiformflächen des Wellenfrontmanipulators ein Immersionsmedium eingebracht, so sind die zueinander bewegten Freiformelemente flüssigkeitsdicht versiegelt, beispielsweise mit Hilfe einer Manschette aus einer elastischen Kunststofffolie, einer Balgenkonstruktion oder ähnlichem.

Die optischen Elemente, an welchen die Freiformflächen des Wellenfrontmanipulators ausgebildet sind, sind bevorzugt aus einem Material mit anormaler Teildispersion gefertigt, ergänzend oder alternativ weist das Immersionsmedium, sofern vorhanden, einen von der Normalgeraden abweichenden Dispersionsverlauf auf. Die Freiformelemente können also aus Medien gebildet sein, die eine Abweichung der Brechzahldispersion von der Normalgeraden aufweisen. Zu solchen Materialen zählen beispielsweise Langkron- oder Kurzflintgläser. Dadurch lassen sich sekundäre chromatische Aberrationen gezielt einstellen bzw. korrigieren. Solche sekundären Farbfehler lassen sich auch durch mehrere Linsen normalerweise nur dann korrigieren, wenn mindestens eine dieser Linsen aus einem solchen Glas mit anormaler Teildispersion gebildet ist. Solche Gläser weisen jedoch zahlreiche Nachteile und unterwünschte Eigenschaften auf. Insbesondere sind sie vergleichsweise teuer und nur schwer zu bearbeiten, da sie chemisch sehr empfindlich gegen alkalische oder säurehaltige Schleif- und Poliermittel sind. Im Gegensatz dazu können hier die Freiformelemente aus preiswerten, säureresistenten Normalgläsern gebildet werden, während als Immersionsmedium zwischen den Freiformelementen ein organischer Kohlenwasserstoff verwendet werden kann, der eine Abweichung im Dispersionsverhalten von der Normalgeraden aufweist und daher geeignet ist, sekundäre Farbfehler zu korrigieren. Mit Hilfe des Wellenfrontmanipulators lässt sich eine Korrektur des sekundären Spektrums somit auf alternativem Wege nur mit Normalgläsern erreichen, also solchen Gläsern, die auf der Normalgeraden im Abbe-Diagramm liegen.

Wie oben bereits erwähnt, ist die zweite Detektionslinsengruppe des Detektionsobjektivs, welche auf der dem Beobachter zugewandten Seite des Wellenfrontmanipulators angeordnet ist, bevorzugt afokal ausgebildet, damit verschiedene Grundobjektive und verschiedene Mikroskop-Tubussysteme frei miteinander kombiniert werden können. Es handelt sich um eine sogenannte "Unendlich-Schnittstelle". In diesem Fall ist bevorzugt hinter der zweiten Linsengruppe, also auf der dem Objekt abgewandten Seite dieser zweiten Detektionslinsengruppe, noch eine dritte Detektionslinsengruppe angeordnet, wenn die zweite Detektionslinsengruppe afokal ausgebildet ist. Die dritte Detektionslinsengruppe ist als Tubuslinsengruppe ausgebildet, zusammen erzeugen alle drei Linsengruppen ein reelles Zwischenbild, welches entweder visuell vergrößert betrachtet oder von einer entsprechenden Detektionseinrichtung wie einer Digitalkamera aufgenommen werden kann.

Bevorzugt bilden die erste Detektionslinsengruppe, die Detektionskorrekturlinse und die mindestens eine Schicht des Trennschichtsystems ein optisches System, welches näherungsweise die Bedingung

$$h_1 = f_{FG} \cdot \sin \sigma_0 = n_0 \cdot f'_{FG} \cdot \sin \sigma_0 \qquad (4)$$

erfüllt, Abweichungen von bis zu 10% von dieser Bedingung sind zulässig und tolerierbar. Dabei ist $h_1$ die Einfallshöhe des Öffnungsstrahls am Wellenfrontmanipulator, $\sigma_0$ der Strahlneigungswinkel des Randstrahls gegen die optische Achse, $f_{FG} = -n_0 \cdot f'_{FG}$ die vordere, objektseitige Brennweite der Frontlinsengruppe und no der Brechungsindex des Immersionsmediums zwischen Objekt und Frontlinse. Diese Bedingung kann beispielsweise durch eine Frontlinsengruppe erfüllt werden, welche - bis auf die Freiformlinse zur Korrektur des schrägen Strahldurchtritts durch das Trennschichtsystem - allein aus sphärischen Linsen besteht. Besonders einfach und exakt lässt sich die Bedingung jedoch erfüllen, wenn die erste Detektionslinsengruppe eine rotationsasphärische Linse in der Nähe der oben erwähnten Aperturblende umfasst. Die Verwendung mindestens einer rotationssymmetrischen asphärischen Linse ist insbesondere vorteilhaft bei Objektiven mit höchster Apertur bzw. großem Aperturwinkel und unterstützt dann nicht nur die Korrektur des üblichen Öffnungsfehlers, d.h. der sphärischen Aberration, sondern auch die Einhaltung der in Gleichung 4 genannten Sinusbedingung der Frontlinsengruppe. Üblicherweise ist diese Sinusbedingung zwar für ein gesamtes Mikroskopobjektiv erfüllt, da sonst keine scharfe Abbildung in einem ausgedehnten Bildfeld möglich wäre, einzelne Teilgruppen eines Objektivs müssen diese Bedingung jedoch nicht zwangsweise erfüllen.

Die bisher insbesondere im Zusammenhang mit der Ausgestaltung des Detektionsobjektivs gemachten Erläuterungen lassen sich ebenso auf das Beleuchtungsobjektiv übertragen. Damit ein exakt definiertes Lichtblatt, beispielsweise ein Bessel-Strahl, erzeugt werden kann, ist zunächst ebenfalls ein auskorrigiertes Grundobjektiv notwendig, welches in der Nähe einer Pupillenebene eine entsprechende Phasenmaske enthält, wie sie aus dem Stand der Technik bekannt ist. Auch im Beleuchtungsobjektiv müssen die Aberrationen aufgrund schräg durch das Trennschichtsystem tretender Lichtstrahlen kompensiert werden, was erfindungsgemäß durch eine Freiform-Korrekturlinse als Beleuchtungskorrekturlinse erfolgen kann, wie sie bereits im Zusammenhang mit dem Detektionsobjektiv beschrieben wurde. Außerdem stellt sich - analog zur Verschiebung der Fokusebene bzw. Objektebene - die Aufgabe, das Lichtblatt entlang der Normalen-Richtung bzw. der primären optischen Achse des Beleuchtungsobjektivs oder entlang der Normalen-Richtung der Begrenzungsplatte tiefer oder weniger tief in die Probe hinein zu verlagern. Dies kann beispielsweise allein durch einen Wellenfrontmanipulator aus bewegten Freiformelementen realisiert werden. Es ist jedoch auch denkbar, dass in der Beleuchtungsoptik, an die geringere Anforderungen zur Korrektur gestellt werden, ein anderes optisches Mittel zur Umfokussierung auf eine andere Fokustiefe zum Einsatz kommt, beispielsweise eine Variolinse aus Elastopolymer oder ähnlichem. Bei geringer Beleuchtungsapertur kann auch eine ganz konventionelle Lösung wie die Gesamtverschiebung des Beleuchtungsobjektivs ein probates Mittel darstellen.

Alternativ oder in Ergänzung kann das Detektionsobjektiv oder das Beleuchtungsobjektiv zum einen mit einer Freiformlinse zur Kompensation des schrägen Lichtdurchtritts durch das Trennschichtsystem ausgestattet sein und zum anderen einen klassischen Mechanismus zur Innenfokussierung und einen klassischen Mechanismus für die oben bereits erwähnten Korrekturfunktionen im Zusammenhang mit verschiedenen Immersionsmedien oder Deckglasdicken und -materialien aufweisen. Als klassischer Mechanismus kommt hier beispielsweise die axiale Verschiebung von Linsen oder Linsengruppen oder auch die Veränderung der Lufträume zwischen den Linsen in Betracht. Um eine größtmögliche Variabilität zu erreichen, kann es insbesondere vorteilhaft sein, einen Teil der Anpassungen durch einen Wellenfrontmanipulator und den anderen Teil der Anpassungen durch axiale Linsenverschiebungen vorzunehmen.

Die Funktion der Detektionskorrekturlinse bzw. Beleuchtungskorrekturlinse kann durch eine ohnehin im System - insbesondere im Objektiv - enthaltende Linse übernommen werden, welche dann vorzugsweise eine hohe Grundbrechkraft besitzt. Auf die sphärischen oder rotationsasphärischen Wirkflächen dieser Linse werden dann die entsprechenden Freiformprofile addiert. Die Funktion der Korrekturlinsen kann aber auch durch Hinzufügen einer separaten, im Wesentlichen brechkraftlosen Zusatzlinse erreicht werden. Dies kann den Vorteil haben, dass die Justieranforderungen des Elements im Strahlengang weniger kritisch sind und damit das System einfacher hergestellt und justiert werden kann.

Außerdem kann die Korrekturwirkung auch auf mehrere Linsen verteilt werden, deren Flächenformen dadurch entsprechend weniger von einer sphärischen Form abweichen müssen und ggf. einfacher hergestellt werden können. Auch ist es möglich, die Form der Korrekturlinse für die Herstellung zu vereinfachen, indem ein prismatischer Anteil des Elements abgespalten und durch einen separaten Keil mit planen Flächen dargestellt wird. Bevorzugtes Mittel ist jedoch, insbesondere aus Gründen einer vereinfachten Justage, eine beidseitig von Freiformflächen begrenzte Detektionskorrekturlinse bzw. Beleuchtungskorrekturlinse.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig.1          den grundsätzlichen Aufbau einer Vorrichtung zur Lichtblattmikroskopie,

Fig.2a-2c    eine erste Ausführung eines Detektionsobjektivs in der Gesamtansicht mit verschiedenen Stellungen eines Wellenfrontmanipulators,

Fig.3a-3c    den Strahlenverlauf im Bereich der Detektionskorrekturlinse im Detail für die in Fig.2a-2c gezeigten Konfigurationen,

Fig.4a-4c    eine weitere Ausgestaltung eines Detektionsobjektivs mit verschiedenen Stellungen eines Wellenfrontmanipulators und

Fig.5a-5c    Details des Strahlenverlaufs im Bereich der Detektionskorrekturlinse für die in Fig.4a-4c gezeigten Stellungen des Wellenfrontmanipulators.

Die im Folgenden erläuterten Beispiele beziehen sich explizit zwar auf ein Detektionsobjektiv, lassen sich jedoch ohne weiteres auch auf ein Beleuchtungsobjektiv übertragen.

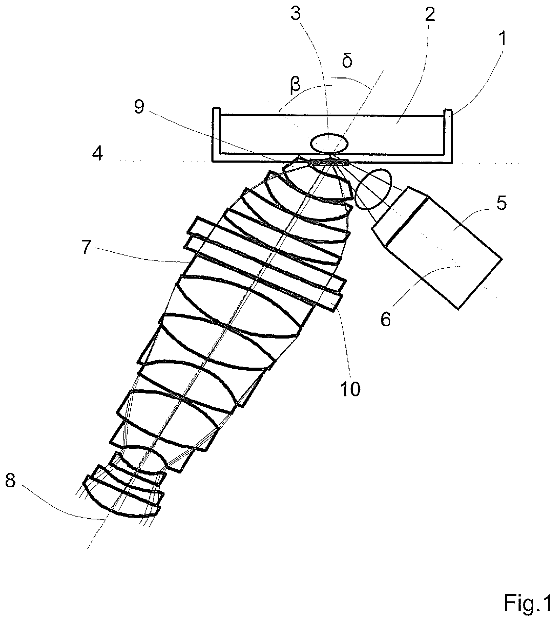

In Figur 1 ist zunächst der grundsätzliche Aufbau einer Vorrichtung zur Lichtblattmikroskopie gezeigt. Diese Vorrichtung umfasst ein Probengefäß 1 zur Aufnahme einer in einem Medium 2 befindlichen Probe, wobei das Probengefäß 1 hinsichtlich einer ebenen Bezugsfläche 4 ausgerichtet ist. Die Vorrichtung umfasst außerdem eine Beleuchtungsoptik mit einem Beleuchtungsobjektiv 5 zur Beleuchtung der Probe 3 über einen Beleuchtungsstrahlengang mit einem Lichtblatt. Die optische Achse - genauer gesagt die primäre optische Achse - 6 des Beleuchtungsobjektivs 5 und das Lichtblatt liegen in einer Ebene, die mit der Normalen der Bezugsfläche 4 einen von Null verschiedenen Beleuchtungswinkel $\beta$ einschließt. Die Vorrichtung umfasst außerdem eine Detektionsoptik mit einem Detektionsobjektiv 7 in einem Detektionsstrahlengang, dessen optische Achse 8 mit der Normalen der Bezugsfläche 4 einen von Null verschiedenen Detektionswinkel $\delta$ einschließt. Die Vorrichtung umfasst außerdem ein Trennschichtsystem mit mindestens einer Schicht aus einem vorgegebenen Material mit vorgegebener Dicke, welche das Medium 2 von dem Beleuchtungsobjektiv 5 und dem Detektionsobjektiv 7 trennt. Dabei ist das Trennschichtsystem mit einer parallel zur Bezugsfläche 4 ausgerichteten Grundfläche zumindest in dem für das Beleuchtungsobjektiv 5 und das Detektionsobjektiv 7 für Beleuchtung bzw. Detektion zugänglichen Bereich mit dem Medium 2 in Kontakt stehend ausgebildet.

Im vorliegenden Beispiel ist das Probengefäß 1 als Petrischale ausgebildet, welche nach oben offen ist und mit dem Medium 2 befüllt ist. Um eine Kontaminierung zu verhindern, können das Beleuchtungsobjektiv 5 und das Detektionsobjektiv 7 entweder oberhalb des Probengefäßes 1 angeordnet sein - in diesem Fall bildet das Trennschichtsystem nur die Luftschicht zwischen der Oberfläche des Mediums 2 und den Objektiven - oder, wie in Figur 1 gezeigt, unterhalb des Probengefäßes 1. In diesem Fall wird das Trennschichtsystem zum einen aus der Schicht zwischen Probengefäß und Objektiv gebildet, zum anderen aber durch den transparenten Boden des Probengefäßes 1, welcher aus einem Material mit einem von 1,0 verschiedenen Brechungsindex gefertigt ist. Da Detektionsobjektiv 7 und Beleuchtungsobjektiv 5 in Bezug auf die Bezugsfläche 4 und insbesondere auf den Boden des Probengefäßes 1 schräg gestellt sind, treten starke Aberrationen auf, wenn Licht vom Beleuchtungsobjektiv 5, hinter dem sich eine nicht gezeigte Lichtquelle befindet, durch das Trennschichtsystem hindurch auf die Probe 3 gelenkt wird, und von der Probe 3 abgestrahltes - beispielsweise gestreutes, reflektiertes oder fluoreszenzangeregtes Licht - in Richtung des Detektionsobjektivs 7 durch das Trennschichtsystem ebenfalls schräg hindurchtritt. Um diese Aberrationen zu beseitigen, umfasst die Vorrichtung zur Lichtblattmikroskopie ein Detektionskorrekturlinsensystem mit mindestens einer Detektionskorrekturlinse 9 zur Verringerung von solchen Aberrationen, welche durch den schrägen Durchtritt von zu detektierendem Licht durch den Grenzflächen des Trennschichtsystems entstehen. Die Schicht zwischen Boden und Objektiv kann beispielsweise Luft sein. Aufgrund der hohen Brechzahlsprünge zwischen den Medien sind die zu korrigierenden rotationsunsymmetrischen Fehler - verglichen mit der Verwendung von Medien mit einander ähnlichen Brechzahlen - relativ groß, die Realisierung von numerischen Aperturen zwischen 0,8 und 1,0 wird in diesem Fall technisch sehr aufwendig. Zwischen dem Boden der Petrischale und den Objektiven befindet sich daher bevorzugt ein Immersionsmedium, beispielsweise Wasser. Ist das Medium 2 von dem Immersionsmedium durch den Boden oder ein entsprechendes Deckglas bei Beobachtung von oben getrennt, so können auch andere Immersionsmedien verwendet werden, beispielsweise solche, die für biologische Proben eine lebensfeindliche Umgebung bedeuten. Wenn man für das Medium 2, das Deckglas und das Immersionsmedium zwischen Deckglas und Objektiv Materialien mit ähnlichen Brechzahlen wählt, lassen sich Korrekturen auch für große numerische Aperturen einfacher mit Freiformflächen realisieren.

Das Beleuchtungsobjektiv 5 ist hier nur schematisch angedeutet, es umfasst jedoch in der Regel ebenfalls eine Vielzahl von Linsen. Im gezeigten Beispiel beträgt der Winkel der primären optischen Achse 8 des Detektionsstrahlenganges zur Normalen der Bezugsfläche 4 $\delta = 26°$, der Öffnungswinkel bei einer numerischen Apertur beträgt in Wasser $\pm$ 40,55°. Der Winkel des Beleuchtungsstrahlengangs zur Normalen der Begrenzungsfläche liegt bei $\beta = 64°$ bei einem Öffnungswinkel von typisch 22° bei einer numerischen Apertur von NA = 0,5. Die Dicke des Gefäßbodens des Probengefäßes 1 liegt typischerweise in einem Bereich zwischen 0,17 mm und 0,50 mm, kann jedoch davon abweichen.

Im gezeigten Beispiel in Figur 1 umfasst das Detektionskorrekturlinsensystem genau eine Detektionskorrekturlinse 9, welche als Freiformlinse ausgestaltet ist und hier die Frontlinse des Detektionsobjektivs 7 bildet. Sie kann aber auch als separates optisches Element ausgeführt sein und zwischen Detektionsobjektiv 7 und Trennschichtsystem angeordnet sein. Auch eine Anordnung im Innern des Objektivs ist prinzipiell möglich, wobei es ggf. ausreicht, die Oberfläche einer einzigen Linse mit einer Freiformfläche zu versehen. Das Detektionsobjektiv 7 verfügt vorzugsweise über eine Detektionsfokussierungseinrichtung zur Innenfokussierung bei gleichzeitiger Korrektur von sphärischen Aberrationen, die bei einer Fokusänderung auftreten können. Die numerische Apertur des Detektionsobjektivs 7 beträgt dabei bevorzugt 0,8 oder mehr.

Neben der Detektionskorrekturlinse 9 umfasst das Detektionsobjektiv 7 im Strahlengang hier beispielhaft außerdem mindestens ein optionales adaptives optisches Detektionsfokussierelement zur Innenfokussierung des Detektionsobjektivs 7 bei gleichzeitiger Korrektur von bei Fokusänderung auftretenden sphärischen Aberrationen. Auf gleiche Weise kann auch das Beleuchtungsobjektiv 5 ausgestaltet sein. Das adaptive optische Element ist hier als Wellenfrontmanipulator 10 ausgestaltet. Dabei ist es auch möglich, die Fokussierelemente in Detektions- und Beleuchtungsobjektiv so auszulegen, dass sie nur der Innenfokussierung dienen, und die Korrekturen der bei Fokusänderung auftretenden sphärischen Aberrationen bereits mittels der übrigen Linsen der Objektive vorgenommen werden.

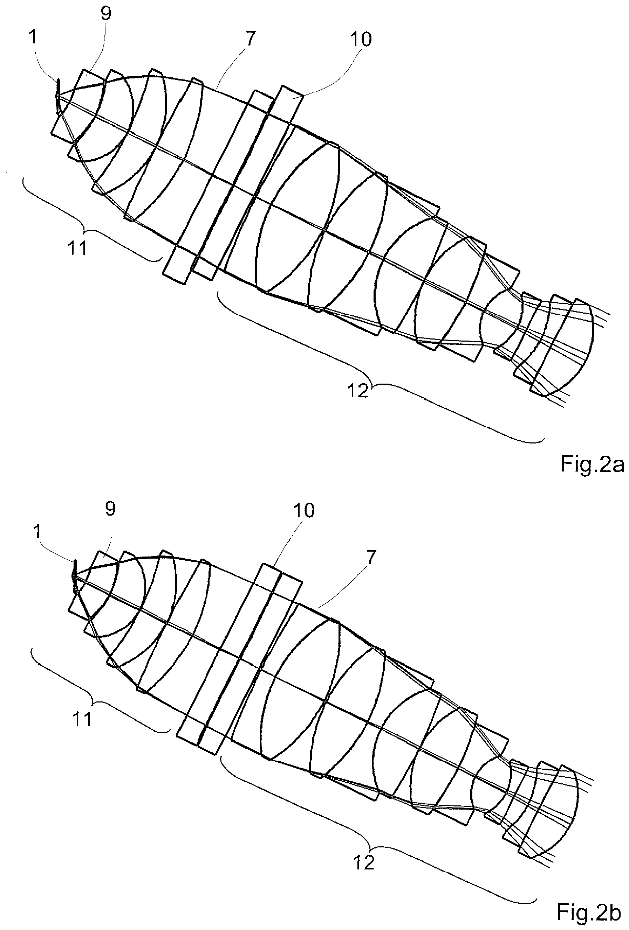

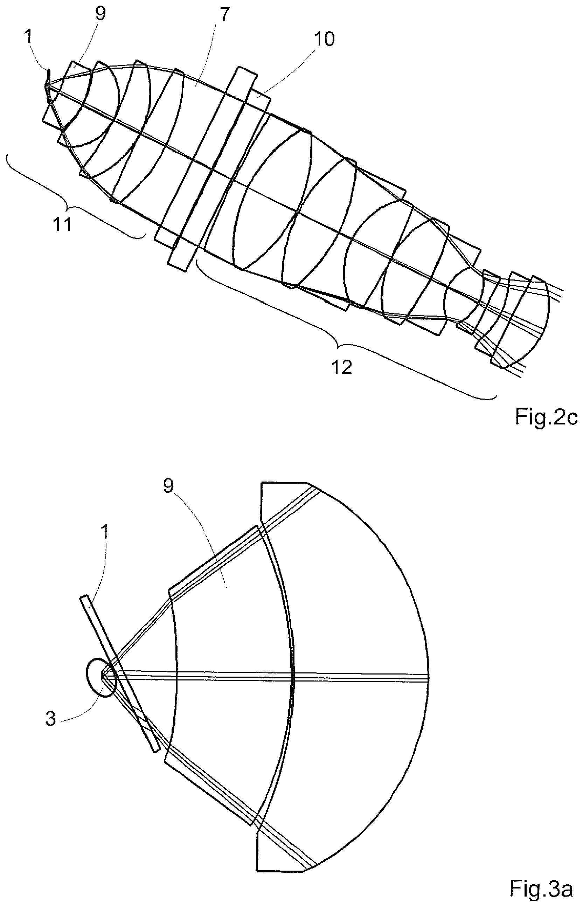

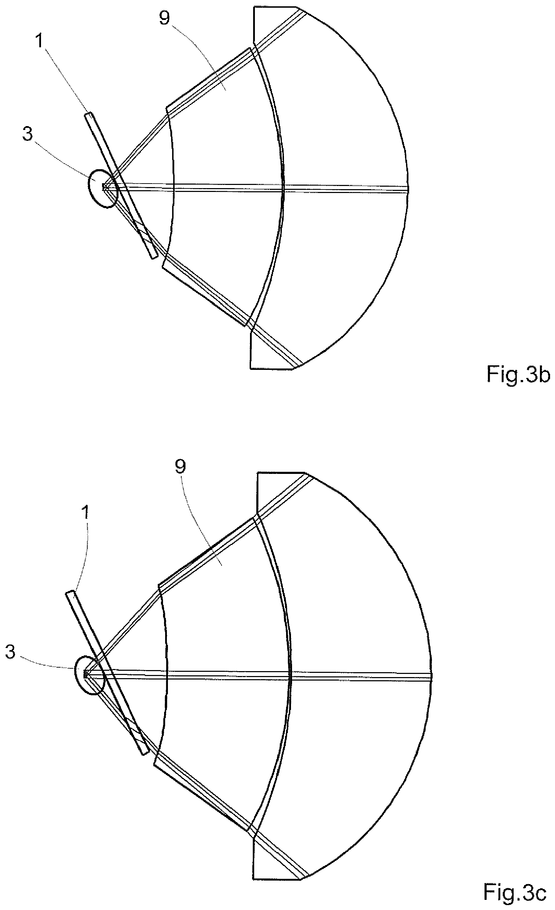

Anhand der Figuren 2a-2c und 3a-3c wird eine erste Ausführung eines Detektionsobjektivs 7, welches Teil der Vorrichtung zur Lichtblattmikroskopie ist, näher beschrieben. Analoge Überlegungen und Einstellungen lassen sich auch für das Beleuchtungsobjektiv 5 machen. Bei dem in den Fig. 2a-2c gezeigte Detektionsobjektiv 7 ist ein adaptives optisches Detektionsfokussierelement im Strahlengang angeordnet, welches als Wellenfrontmanipulator 10 ausgestaltet ist. In den Figuren 2a, 2b und 2c ist jeweils dasselbe Objektiv gezeigt, jedoch mit unterschiedlichen Stellungen des Wellenfrontmanipulators 10, so dass sich unterschiedliche Strahlengänge ergeben. Die Figuren 3a, 3b und 3c zeigen entsprechende Ausschnitte im Frontlinsenbereich, die zu den jeweiligen Stellungen des Wellenfrontmanipulators 10 korrespondieren. Die unterschiedlichen Fokusebenen sind hier besonders gut zu erkennen.

Die Detektion erfolgt hier durch ein Standard-Deckglas der Dicke 0,17 mm hindurch. Das Detektionsobjektiv 7 weist eine numerische Apertur von NA = 1,0 und eine 40-fache Vergrößerung auf. Es ist auf das Immersionsmedium Wasser ausgelegt, das heißt anstelle eines Trennschichtsystems aus Deckglas und Luft sollte hier ein Trennschichtsystem aus Deckglas und Wasser verwendet werden. Das Detektionsobjektiv 7 beinhaltet genau eine Detektionskorrekturlinse 9, die als Freiformlinse ausgestaltet ist. Sie kompensiert den Einfluss eines unter 26° schräg durchtretenen Deckglases. Der Wellenfrontmanipulator 10 umfasst zwei transversal zueinander bewegbare Freiformelemente, die zur Refokussierung innerhalb einer Probentiefe von $\pm 50$ $\mu$m bei einer mittleren Wellenlänge von 500 nm geeignet sind. Das Objektiv weist ein objektseitiges Bildfeld von 200 $\mu$m Durchmesser auf.

In den Figuren 2a-2c ist jeweils ein meridionaler Schnitt durch das Detektionsobjektiv 7 gezeigt. In Figur 2a und entsprechend in Figur 3a befindet sich der Wellenfrontmanipulator 10 in einer Stellung, welche die objektseitige Fokuslage, die Schnittweite, um 50 $\mu$m verkürzt. In Figur 2b und entsprechend in Figur 3b zeigt die mittlere, neutrale Stellung des Wellenfrontmanipulators 10 und Figur 2c und entsprechend Figur 3c die Stellung, bei der die Fokuslage um 50 $\mu$m tiefer im Probenraum liegt. Insgesamt variiert der Abstand der fokussierten Ebene im Probenraum vom Deckglas oder Boden des Probengefäßes 1 in einem Bereich zwischen 0,35 mm bis 0,45 mm. Die Verlagerung der jeweiligen objektseitigen Fokuslage ist in den Ausschnittsvergrößerungen in den Figuren 3a-3c noch besser zu erkennen.

Bei dem Detektionsobjektiv 7 ist die Abbildungsgüte über den gesamten Defokussierungsbereich hinweg beugungsbegrenzt. Das Detektionsobjektiv 7 weist, bis auf die Detektionskorrekturlinse 9 und den Wellenfrontmanipulator 10, ausschließlich sphärische Linsen auf, deren Oberflächen durch die übliche Scheitelpunktform der Kugelgleichung

$$z = \frac{(x^2 + y^2)/R}{1 + \sqrt{1 - (1+k) \cdot \dfrac{(x^2 + y^2)}{R^2}}} \qquad (5)$$

beschrieben werden kann.

Die Detektionskorrekturlinse 9 zur Korrektur des von den Strahlenbündeln schräg durchsetzten Deckglases weist sowohl an der Vorder- als auch an der Rückseite eine Freiformfläche auf, wobei beide Freiformflächen sich entsprechend der Gleichung (1a) als Überlagerung einer sphärischen Basisfläche und einer Polynomentwicklung beschreiben lassen. Die Freiformflächen des Wellenfrontmanipulators lassen sich durch die Gleichung (1b) beschreiben. Die Detektionskorrekturlinse 9 bildet hier die Frontlinse des Detektionsobjektivs 7 und kompensiert den Einfluss des vom zu detektierenden Licht schräg durchtretenen Deckglases nahezu vollständig. Die z-Achse entspricht der primären optischen Achse des Detektionsobjektivs 7, die x-Achse steht zur Blattebene in Figur 1 und in den übrigen Figuren senkrecht.

In folgender Tabelle 1 sind die optischen Konstruktionsdaten für das in den Figuren 2a-2c, 3a-3c gezeigte Detektionsobjektiv 7 dargestellt. Alle optischen Elemente sind als brechende Glaselemente ausgeführt.

Tabelle 1: Objektivdaten zum ersten Ausführungsbeispiel (Fig. 2a-c, Fig. 3a-c)

| Nr. | Radius (y) | Dicke/ Abstand | Glastyp / Medium | Halber Durchmesser | Non-Centered Data |
|---|---|---|---|---|---|
| Objekt | ∞ | 0,3500 | 'W23' | | |
| 1 | ∞ | 0,0000 | 'W23' | 1,5 | Basic Decenter |
| 2 | ∞ | 0,1700 | K5 | 1,5 | |
| 3 | ∞ | 0,0000 | 'W23' | 1,8 | |
| 4 | ∞ | 1,2000 | 'W23' | 0,8 | Basic Decenter |
| 5 | -3,1758 | 2,7136 | SLAH58 | 1,9 | Decenter & Return |
| 6 | -6,8472 | 0,0500 | | 3,5 | Decenter & Return |
| 7 | -8,6858 | 3,1340 | SFPL53 | 3,6 | |
| 8 | -5,0455 | 0,0200 | | 4,6 | |
| 9 | -19,3329 | 2,6253 | SFPL53 | 5,6 | |
| 10 | -8,7858 | 0,0200 | | 6,1 | |
| 11 | 178,6613 | 2,6274 | SFPL53 | 6,8 | |
| 12 | -15,7993 | 1,4251 | | 7,0 | |
| 13 | ∞ | 0,0000 | | 7,8 | Basic Decenter |
| 14 | ∞ | 2,0000 | NLASF44 | 7,8 | |
| 15 | ∞ | 0,0000 | | 7,8 | |
| 16 | ∞ | 0,0000 | | 7,2 | Basic Decenter |
| Blende | ∞ | 0,1000 | | 7,0 | |
| 18 | ∞ | 0,0000 | | 7,8 | Basic Decenter |
| 19 | ∞ | 2,0000 | NLASF44 | 7,8 | |
| 20 | ∞ | 0,0000 | | 7,9 | |
| 21 | ∞ | 0,0000 | | 7,2 | Basic Decenter |
| 22 | ∞ | 0,2000 | | 7,2 | |
| 23 | 120,1456 | 1,5000 | NKZF511 | 7,3 | |
| 24 | 14,7553 | 5,0755 | SFPL53 | 7,3 | |
| 25 | -13,4480 | 0,2000 | | 7,4 | |
| 26 | 13,3186 | 4,5436 | SFPL53 | 6,8 | |
| 27 | -14,9847 | 1,4000 | NKZF511 | 6,4 | |
| 28 | 7,2474 | 4,1147 | SFPL53 | 5,6 | |
| 29 | -50,8349 | 1,0937 | | 5,5 | |
| 30 | 8,0673 | 3,6755 | SNBH53 | 5,2 | |
| 31 | 36,1929 | 2,3966 | NKZFS2 | 4,6 | |

(fortgesetzt)

| Nr. | Radius (y) | Dicke/ Abstand | Glastyp / Medium | Halber Durchmesser | Non-Centered Data |
|-----|-----------|----------------|------------------|--------------------|--------------------|
| 32 | 36,924 | 3,0423 | | 2,8 | |
| 33 | -4,0923 | 0,8000 | NKZF54 | 2,7 | |
| 34 | -6782,3949 | 1,5151 | | 3,0 | |
| 35 | -7,5088 | 1,0000 | NKZF58 | 3,3 | |
| 36 | 272,5054 | 2,9577 | NLAK8 | 4,1 | |
| 37 | -6,0684 | 0,0200 | | 4,5 | |
| 38 | ∞ | 126,5000 | | 4,5 | |
| 39 | 189,4170 | 10,9000 | NBALF4 | 7,8 | |
| 40 | -189,4170 | 60,0000 | | 7,8 | |
| 41 | ∞ | 80,0000 | | 6,4 | |
| 42 | ∞ | 48,2000 | NBK7 | 5,3 | |
| Bild | ∞ | 0,0000 | | 4,3 | |

Der y-Radius in Tabelle 1 ist der Scheitelradius in der y-z-Ebene. Der Halb-Durchmesser bezeichnet den freien Halbdurchmesser, d.h. den halben erforderlichen Durchmesser der Fläche, durch welche alle Strahlenbündel gerade unvignettiert durch das optische System hindurchtreten können, und ist in mm angegeben.

Die Flächen werden von der Objektseite her durchnummeriert, die Nummern sind in der linken Spalte angegeben. Die Probe befindet sich in einer physiologischen Kochsalzlösung, die mit "W23" bezeichnet wird, ebenso befindet sich diese Kochsalzlösung zwischen dem Deckglas und dem Objektiv. Die objektseitige Fläche des Deckglases hat die Flächennummer 2. Zwischen der Linsenfläche 16 und der Linsenfläche 18 befindet sich eine nicht gezeigte Aperturblende, die Detektionskorrekturlinse 9 trägt als objektseitige Flächennummer die 5 und als dem Objekt abgewandte Flächennummer die 6. Die Freiformflächen des Wellenformmanipulators 10 tragen die Nummern 15 und 19. Ist als Radius ein Wert von "∞" angegeben, so handelt es sich bei den sphärischen Flächen jeweils um eine Planfläche, im Falle einer asphärischen Fläche ist dann der Radius der gedachten Kegelschnittfläche am Scheitelpunkt R = 0. Die Dicke ist in mm angegeben, ebenso der y-Radius. Bis auf die Freiformflächen 5, 6, 15 und 19 sind alle Flächen sphärisch oder plan. Die Angaben in der letzten Spalte beziehen sich auf den Dezentrierungstyp, die Dezentrierungsdaten für die Freiformflächen ADE, BDE, CDE, XDE, YDE, ZDE sind an anderer Stelle in Tabelle 3 aufgeführt. "Basic Decenter" bedeutet, dass das für die Bestimmung von Koeffizienten etc. herangezogene Koordinatensystem für die aktuelle und alle nachfolgenden Flächen um Dezentrierungsangaben verdreht und verkippt ist. Die Angabe "Decenter and Return" bedeutet, dass die Dezentrierung nur für die aktuelle Fläche gültig ist, man für die nächste Fläche wieder zu dem davor gültigen zurückkehrt, wobei die Reihenfolge entsprechend der Nummerierung der Flächen festgelegt ist. Die Brechzahlen der optischen Medien der den zur Auslegung betrachteten Wellenlängen sind für einige ausgewählte Wellenlängen in Tabelle 2 angegeben . Im Fall der Dezentrierungsdaten von Fläche 1 in Tabelle 1 ist ADE = 26,00, alle anderen Werte sind Null. Im Falle von Fläche 4 in Tabelle 1 ist ADE = -26,00 und YDE = -0,0788, alle anderen Werte sind Null.

Tabelle 2: in den Objektiven verwendete Glassorten

| Glassorte/ Medium | λ[nm] | 850,0 | 643,85 | 546,07 | 479,99 | 435,83 | 404,00 | 365.00 |
|-------------------|-------|-------|--------|--------|--------|--------|--------|--------|
| 'W23' | | 1,3268 | 1,3311 | 1,3341 | 1,3371 | 1,3399 | 1,3425 | 1,3467 |
| K5 | | 1,5151 | 1,5202 | 1,5245 | 1,5290 | 1,5333 | 1,5374 | 1,5441 |
| SLAH58 | | 1,8658 | 1,8775 | 1,8881 | 1,8994 | 1,9104 | 1,9211 | 1,9391 |
| SFPL53 | | 1,4348 | 1,4375 | 1,4398 | 1,4422 | 1,4444 | 1,4464 | 1,4498 |
| NLASF44 | | 1,7901 | 1,7998 | 1,8083 | 1,8173 | 1,8259 | 1,8342 | 1,8481 |
| NKZFS11 | | 1,6254 | 1,6339 | 1,6413 | 1,6491 | 1,6567 | 1,6640 | 1,6763 |
| SNBH53 | | 1,7202 | 1,7323 | 1,7434 | 1,7555 | 1,7676 | 1,7798 | 1,8012 |
| NKZFS2 | | 1,5494 | 1,5557 | 1,5608 | 1,5661 | 1,5711 | 1,5759 | 1,5838 |

(fortgesetzt)

| Glassorte/ Medium | λ[nm] | 850,0 | 643,85 | 546,07 | 479,99 | 435,83 | 404,00 | 365.00 |
|---|---|---|---|---|---|---|---|---|
| NKZFS4 | | 1,6020 | 1,6098 | 1,6166 | 1,6238 | 1,6307 | 1,6373 | 1,6486 |
| NBALF4 | | 1,5706 | 1,5768 | 1,5821 | 1,5876 | 1,5930 | 1,5981 | 1,6065 |
| NBK7 | | 1,5098 | 1,5147 | 1,5187 | 1,5228 | 1,5266 | 1,5303 | 1,5362 |
| NKZFS8 | | 1,7042 | 1,7153 | 1,7253 | 1,7363 | 1,7472 | 1,7580 | 1,7769 |
| NKLAK8 | | 1,7018 | 1,7096 | 1,7161 | 1,7229 | 1,7294 | 1,7355 | 1,7457 |

Die Polynomkoeffizienten der vorderen, dem Objekt zugewandten Freiformflächen der Freiformlinse mit der Nummer 5 lauten:

Tabelle 3: Polynomkoeffizienten, vordere Freiformfläche der Detektionskorrekturlinse 9

| Y: | -1,4627E-02 | | X2: | 1,2761 E-01 | | Y2: | 1,2671 E-01 |
|---|---|---|---|---|---|---|---|
| X2Y: | 1,2631 E-03 | | Y3: | 2,0508E-03 | | X4: | -2,2250E-03 |
| X2Y2: | -4,8626E-03 | | Y4: | -2,8374E-03 | | X4Y: | 2,5817E-04 |
| X2Y3 : | 6,8766E-04 | | Y5: | 5,0231 E-04 | | X6: | 2,4021 E-04 |
| X4Y2: | 6,8499E-04 | | X2Y4: | 5,9973E-04 | | Y6: | 1,4423E-04 |
| XDE: | 0,000000 | | YDE: | 0,000000 | | ZDE: | 0,000000 |
| ADE: | -0,691247 | | BDE: | 0,000000 | | CDE: | 0,000000 |

Dabei bezeichnet die Schreibweise "X2Y3" den Koeffizienten $C_{2,3}$, d.h. m = 2, n = 3, etc. "Y" bezeichnet n = 1 und m = 0 Die Angaben "XDE, ..., CDE" beziehen sich auf die Dezentrierung des Koordinatensystems und sind so zu verstehen, dass das lokale Koordinatensystem, in welchem die entsprechende Fläche durch ihre Pfeilhöhenformeln - Gleichung (1a) oder (1b) - beschrieben ist, gegenüber dem globalen Koordinatensystem um einen Winkel ADE um die lokale x-Achse gedreht ist, um einen Winkel BDE um die lokale y-Achse und um einen Winkel CDE um die lokale z-Achse. Ein positives Vorzeichen bedeutet dabei eine Drehung gegen den Uhrzeigersinn, ein negativeseine Drehung im Uhrzeigersinn um die jeweilige lokale Achse.

Die Polynomkoeffizienten der hinteren Freiformfläche der Detektionskorrekturlinse 9 sind in Tabelle 4 angegeben:

Tabelle 4: Polynomkoeffizienten, hintere Freiformfläche der Detektionskorrekturlinse 9

| Y: | -2,7790E-02 | | X2: | 7,5549E-03 | | Y2: | 6,9247E-03 |
|---|---|---|---|---|---|---|---|
| X2Y: | -2,7842E-05 | | Y3: | 6,4922E-05 | | X4: | 1,2461 E-04 |
| X2Y2: | 2,1053E-04 | | Y4: | 7,7032E-05 | | X4Y: | 1,4567E-05 |
| X2Y3: | 3,9465E-05 | | Y5: | 2,6627E-05 | | X6: | -7,3228E-06 |
| X4Y2 : | -2,3699E-05 | | X2Y4: | -2,6746E-05 | | Y6: | 1,0446E-05 |
| XDE: | 0,000000 | | YDE | 0,000000 | | ZDE : | 0,000000 |
| ADE: | -0,691247 | | BDE: | 0,000000 | | CDE: | 0,000000 |

In Tabelle 5 schließlich sind die Polynomkoeffizienten der beiden Freiformflächen des Wellenfrontmanipulators 10 mit den Flächennummern. 15 und 19 beschrieben:

Tabelle 5: Polynomkoeffizienten der Freiformflächen des Wellenfrontmanipulators

| X2Y: | -2,7842E-05 | | Y3: | -1,3950E-04 | | X4Y: | -7,1487E-09 |
|---|---|---|---|---|---|---|---|
| X2Y3: | 3,9465E-05 | | Y5 : | -1,4910E-08 | | X6Y: | 6,2211 E-09 |
| X4Y3: | -2,3699E-05 | | X2Y5: | 3,5843E-09 | | Y7: | 8,4412E10 |

Der seitliche Bewegungsbereich der beiden Freiformelemente des Wellenfronmanipulators 10 beträgt jeweils 0,67 mm, wobei sich die beiden Elemente stets exakt gegenläufig zueinander und entlang der y-Koordinatenrichtung des Systems bewegen. Während sich die Freiformelemente im Bereich ± 0,67 mm seitlich bewegen, also eine Relativbewegung von etwa 1,4 mm zueinander ausführen, bewegt sich der objektseitige Fokuspunkt um ± 50 μm in Längsrichtung entlang der z-Achse. Zwischen den Figuren 3a und 3c wandert die Fokusebene tiefer in die Probe hinein, so dass sich der Abstand vom Deckglas von 0,35 mm auf 0,45 mm vergrößert.

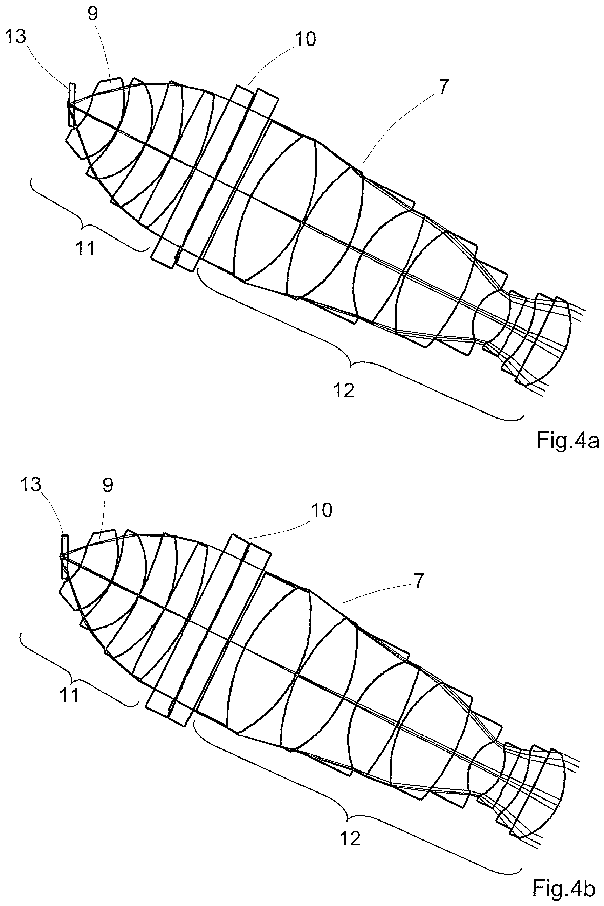

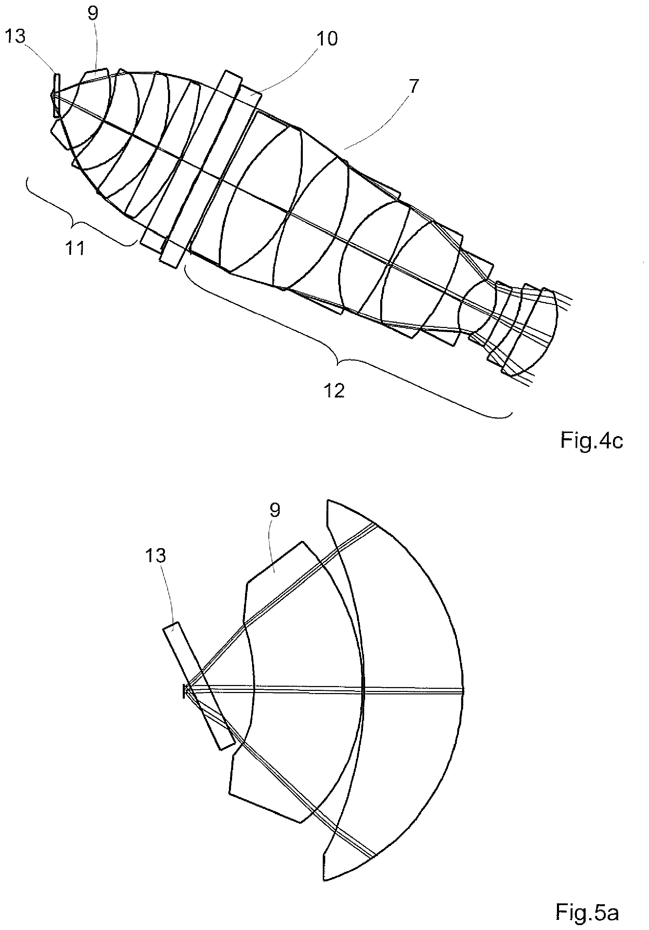

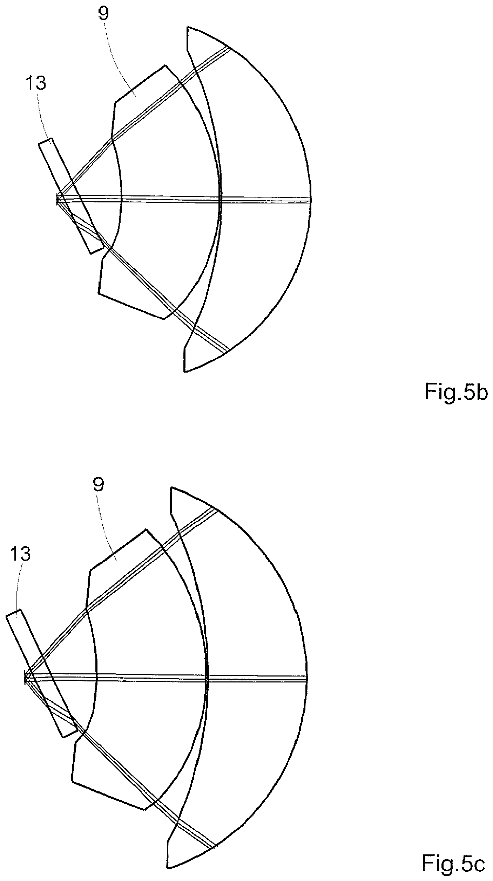

Ein zweites Ausführungsbeispiel ist in den Figuren 4a-4c in der Übersicht und in den Figuren 5a-5c ausschnittsweise für den vorderen Bereich dargestellt. Im Unterschied zu der in den Figuren 2 und 3 gezeigten Ausführung ist das hier gezeigte Detektionsobjektiv 7 für die Lichtblattmikroskopie durch den 0,5 mm dicken Gefäßboden 13 einer Petrischale hindurch ausgelegt. Auch hier bilden die primäre optische Achse des Detektionsobjektivs 7 und die Normale der Bezugsfläche 4 einen Winkel von 26°. Dieser Winkel wurde - ebenso wie im Falle des ersten Ausführungsbeispiel, welches im Zusammenhang mit Tabelle 1 beschrieben wurde - willkürlich und nur als Beispiel gewählt um das Funktionieren zu demonstrieren. Ebenso sind auch größere Einfallswinkel von beispielsweise 32° möglich. Das hier gezeigte Detektionsobjektiv 7 weist ebenfalls eine numerische Apertur von NA = 1,0 und eine 40-fache Vergrößerung bei einem objektseitigen Bildfelddurchmesser von 0,2 mm auf. Es ist ebenfalls auf Wasser als Immersionsmedium ausgelegt. Es umfasst ebenfalls eine Detektionskorrekturlinse 9, welche gegenüber der in den Figuren 2 und 3 gezeigten Detektionskorrekturlinse deutlich größere Flächenneigungswinkel und Freiformprofiltiefen aufweist. Sie ist dafür ausgelegt, den Einfluss des unter 26° schräg durchtretenen Gefäßbodens 13 der Petrischale praktisch vollständig zu kompensieren. Der Boden der Petrischale ist jedoch deutlich dicker als das im ersten Ausführungsbeispiel verwendete Deckglas, so dass etwas größere Restfehlereinflüsse verbleiben. Das Detektionsobjektiv 7, welches in den Figuren 4 und 5 gezeigt ist, umfasst wiederum einen Wellenfrontmanipulator 10, aus zwei transversal zueinander bewegten Freiformelementen, die zur Refokussierung innerhalb einer Probentiefe von ±50 μm bei einer mittleren Wellenlänge von 500 nm geeignet sind. Die absolute Schnittweite der jeweils scharf fokussierten Ebenen im Probenraum, gemessen von der Oberseite des Gefäßbodens 13 aus, variiert dabei von 2,2 mm bis 2,3 mm.

Das in den Figuren 4a-4c gezeigte Detektionsobjektiv 7 umfasst ebenso wie das in den Figuren 2a-2c gezeigte Detektionsobjektiv 7 eine der Detektionskorrekturlinse 9 nachgeordnete erste Detektionslinsengruppe 11, wobei die Detektionskorrekturlinse 9 auch Teil der ersten Detektionslinsengruppe 11 sein kann. Die erste Detektionslinsengruppe 11 bildet ein objektseitiges Bildfeld 11 endlich ab. Das Detektionsobjektiv 7 umfasst außerdem eine zweite Detektionslinsengruppe 12, welche bevorzugt afokal ausgebildet ist, so dass sich daran ein Tubuslinsensystem anschließen kann. Ein adaptives optisches Detektionsfokussierelement, ein Wellenfrontmanipulator 10 ist zwischen erster Detektionslinsengruppe 11 und zweiter Detektionslinsengruppe 12 angeordnet. Zwischen den gegeneinander beweglichen Freiformflächen des Wellenfrontmanipulators 10 kann ein Immersionsmedium eingebracht sein, bei den beiden Beispielen aus Figur 2a-2c und Figur 4a-4c befindet sich jedoch zwischen diesen Flächen Luft.

Die optischen Konstruktionsdaten für das in den Figuren 4a -4c und 5a-5c gezeigte Detektionsobjektiv 7 sind in Tabelle 6 angegeben.

Tabelle 6: Objektivdaten zweites Ausführungsbeispiel (Figur 4a-c, Figur 5a-c)

| Nr. | Y-Radius | Dicke/ Abstand | Glastyp / Medium | Halber Durchmesser | Non-Centered Data |
|---|---|---|---|---|---|
| Objekt | ∞ | 02000 | 'W23' | ° | |
| 1 | ∞ | 0,0000 | 'W23' | 1,1 | Basic Decenter |
| 2 | ∞ | 0,5000 | K5 | 1,1 | |
| 3 | ∞ | 0,000 | 'W23' | 1,9 | |
| 4 | ∞ | 1,3151 | 'W23' | 1,0 | Basic Decenter |
| 5 | -50,5238 | 3,2294 | SLAH58 | 2,0 | Decenter & Return |
| 6 | -5,7892 | 0,0500 | | 3,9 | Decenter & Return |
| 7 | -11,0100 | 2,9446 | SFPL53 | 4,4 | |
| 8 | -6,0013 | 0,0200 | | 5,1 | |
| 9 | -28,8901 | 2,6092 | SFPL53 | 6,1 | |
| 10 | -10,4976 | 0,0200 | | 6,5 | |
| 11 | 762,0778 | 2,3473 | SFPL53 | 7,0 | |
| 12 | -18,5588 | 0,2000 | | 7,3 | |

(fortgesetzt)

| Nr. | Y-Radius | Dicke/ Abstand | Glastyp / Medium | Halber Durchmesser | Non-Centered Data |
|---|---|---|---|---|---|
| 13 | ∞ | 0,0000 | | 7,5 | Basic Decenter |
| 14 | ∞ | 2,0000 | NLASF44 | 7,5 | |
| 15 | ∞ | 0,0000 | | 7,5 | |
| 16 | ∞ | 0,0000 | | 7,3 | Basic Decenter |
| Blende | ∞ | 0,1000 | | 7,0 | |
| 18 | ∞ | 0,0000 | | 7,6 | Basic Decenter |
| 19 | ∞ | 2,0000 | NLASF44 | 7,6 | |
| 20 | ∞ | 0,0000 | | 7,6 | |
| 21 | ∞ | 0,0000 | | 7,3 | Basic Decenter |
| 22 | ∞ | 0,2000 | | 7,3 | |
| 23 | 326,2293 | 1,5000 | NKZF511 | 7,3 | |
| 24 | 14,9519 | 5,3676 | SFPL53 | 7,4 | |
| 25 | -12,5201 | 0,2000 | | 7,6 | |
| 26 | 15,2010 | 4,6527 | SFPL53 | 6,8 | |
| 27 | -12,2645 | 1,4000 | NKZF511 | 6,5 | |
| 28 | 7,6708 | 4,2387 | SFPL53 | 5,7 | |
| 29 | -31,6920 | 0,3584 | | 5,7 | |
| 30 | 9,5134 | 5,5986 | SNBH53 | 5,4 | |
| 31 | -17,3976 | 1,8434 | NKZFS2 | 4,3 | |
| 32 | 3,8076 | 3,0034 | | 2,8 | |
| 33 | -4,0995 | 0,8000 | NKZF54 | 2,7 | |
| 34 | -49,2892 | 1,4283 | | 3,2 | |
| 35 | -7,5925 | 1,0000 | NKZF58 | 3,4 | |
| 36 | -114,7567 | 2,8535 | NLAK8 | 4,2 | |
| 37 | -6,0984 | 0,0200 | | 4,6 | |
| 38 | ∞ | 126,5000 | | 4,5 | |
| 39 | 189,4170 | 10,9000 | NBALF4 | 7,9 | |
| 40 | -189,4170 | 60,0000 | | 7,9 | |
| 41 | ∞ | 80,0000 | | 6,6 | |
| 42 | ∞ | 48,2000 | NBK7 | 5,4 | |
| Bild | ∞ | 0,00000 | | 4,4 | |

Die objektseitige Fläche des Gefäßbodens hat wieder die Flächennummer 2. Auch hier befindet sich zwischen der Linsenfläche 16 und der Linsenfläche 18 eine nicht gezeigte Aperturblende. Die objektseitige Fläche der Detektionslinse 9 trägt die Flächennummer 5, die dem Objekt abgewandte Fläche die Flächennummer 6. Die Freiformflächen des Wellenfrontmanipulators 10 tragen wieder die Flächennummern 15 und 19. Ist als Radius ein Wert von "∞" angegeben, so handelt es sich um eine Planfläche. Die Dicke ist in mm angegeben, ebenso der y-Radius; die Semi-Apertur ist in Grad angegeben. Bis auf die Freiformflächen 5, 6, 15 und 19 sind alle Flächen sphärisch oder plan. Die Brechzahlen der verwendeten optischen Medien sind wieder für einige ausgewählte Wellenlängen in Tabelle 2 angegeben. Hinsichtlich der Dezentrierungsangaben ist im Falle der Fläche 1 in Tabelle 6 ADE = 26,00, alle anderen Werte sind Null. Im Falle der Fläche 4 ist ADE = -26,00 und YDE = -0,233, alle anderen Werte sind Null.

Die Polynomkoeffizienten der objektseitigen Freiformfläche der Detektionskorrekturlinse 9 sind in Tabelle 7 angegeben.

Tabelle 7: Polynomkoeffizienten, vordere Freiformfläche der Detektionskorrekturlinse 9

| | | | | | | |
|---|---|---|---|---|---|---|
| Y: | -7,4104E-02 | X2 : | -6,1791 E-01 | | Y2: | -6,7701 E-01 |
| X2Y: | 4,9894E-03 | Y3: | 7,7251 E-03 | | X4: | -3,5997E-03 |
| X2Y2: | -7,9746E-03 | Y4: | -4,4505E-03 | | X4Y: | -1,8385E-04 |
| X2Y3: | -5,2709E-04 | Y5: | -8,3091 E-04 | | X6: | -3,4909E-05 |
| X4Y2: | -4,4370E-04 | X2Y4: | -9,3741 E-04 | | Y6: | -5,3721 E-04 |
| X6Y: | 2,1565E-04 | X4Y3: | 8,7263E-04 | | X2Y5: | 1,3599E-03 |
| Y7 : | 7,6398E-04 | X8: | -5,6173E-05 | | Y6: | -2,6477E-04 |
| X4Y4: | -5,0864$^E$-04 | X2Y6 : | -514824E-04 | | Y6: | -2,1138E-04 |
| XDE: | 0,000000 | YDE: | 0,000000 | | ZDE: | 0,000000 |
| ADE: | -4,397939 | BDE: | 0,000000 | | CDE: | 0,000000 |

Die Polynomkoeffizienten und Verkippwinkel der hinteren, dem Objekt abgewandten Freiformfläche der Detektionskorrekturlinse sind in Tabelle 8 angegeben.

Tabelle 8: Polynomkoeffizienten, hintere Freiformfläche der Detektionskorrekturlinse 9

| | | | | | | |
|---|---|---|---|---|---|---|
| Y: | -1,2654E-01 | | X2: | 3,4516E-03 | Y2: | 5,4734E-04 |
| X2Y: | -1,0811E-03 | | Y3: | -8,8831E-04 | X4: | 4,2200E-05 |
| X2Y2: | -3,7175E-05 | | Y4: | -8,4836E-05 | X4Y: | -1,7277E-05 |
| X2Y3: | -3,4851E-05 | | Y5: | -2,3536E-05 | X6: | -2,4403E-07 |
| X4Y2: | -4,4743E-06 | | X2Y4: | -8,6894E-06 | Y6: | -5,3688E-06 |
| X6Y: | 5,3090E-07 | | X4Y3: | 2,3837E-06 | X2Y5: | 3,7312E-07 |
| Y7: | 1,9795E-06 | | X8: | -9,9068E-08 | X6Y2: | -6,8055E-07 |
| X4Y4: | -1,5656E-06 | | X2Y6 : | -1,4937E-06 | Y8: | -4,6521E-07 |
| XDE: | 0,000000 | | YDE: | 0,000000 | ZDE: | 0,000000 |
| ADE: | -7,681883 | | BDE: | 0,000000 | CDE: | 0,000000 |

Die Polynomkoeffizienten der beiden identischen Freiformflächen des Wellenfrontmanipulators 10 schließlich sind in Tabelle 9 wiedergegeben.

Tabelle 9: Polynomkoeffizienten der Freiformflächen des Wellenfrontmanipulators 10

| | | | | | | |
|---|---|---|---|---|---|---|
| X2Y: | -9,8736E-04 | | Y3: | -3,3167E-04 | | X4Y: | 7,5993E-07 |
| X2Y3: | 5,5087E-07 | | Y5: | 1,7984E-07 | | X6Y: | 1,4421E-08 |
| X4Y3: | 1,3706E-08 | | X2Y5: | 7,9007E-09 | | Y7: | 1,6883E-09 |

**Bezugszeichenliste**

1 Probengefäß
2 Medium
3 Probe
4 Bezugsfläche

5    Beleuchtungsobjektiv
6    optische Achse
7    Detektionsobjektiv
8    optische Achse
9    Detektionskorrekturlinse
10   Wellenfrontmanipulator
11   erste Detektionslinsengruppe
12   zweite Detektionslinsengruppe
13   Gefäßboden


**Patentansprüche**

1.  Vorrichtung zur Lichtblattmikroskopie, umfassend

    - eine Beleuchtungsoptik mit einem Beleuchtungsobjektiv (5) zur Beleuchtung einer auf einem Probenträger in einem Medium (2) befindlichen Probe (3) über einen Beleuchtungsstrahlengang mit einem Lichtblatt, wobei die optische Achse (6) des Beleuchtungsobjektivs (5) und das Lichtblatt in einer Ebene liegen, die mit der Normalen einer horizontalen, ebenen Bezugsfläche (4), hinsichtlich welcher der Probenträger ausgerichtet ist, einen von Null verschiedenen Beleuchtungswinkel ($\beta$) einschließt,
    - eine Detektionsoptik mit einem Detektionsobjektiv (7) in einem Detektionsstrahlengang, dessen optische Achse (8) mit der Normalen der Bezugsfläche (4) einen von Null verschiedenen Detektionswinkel ($\delta$) einschließt,
    - ein Trennschichtsystem mit mindestens einer Schicht aus einem vorgegebenen Material mit vorgegebener Dicke, welche das Medium (2) von dem Beleuchtungsobjektiv (5) und dem Detektionsobjektiv (7) trennt, wobei das Trennschichtsystem mit einer parallel zur Bezugsfläche (4) ausgerichteten Grundfläche (9) zumindest in dem für das Beleuchtungsobjektiv (5) und das Detektionsobjektiv (7) für Beleuchtung bzw. Detektion zugänglichen Bereich mit dem Medium (2) in Kontakt steht, **dadurch gekennzeichnet, dass**
    - die Vorrichtung ein Detektionskorrekturlinsensystem mit mindestens einer Detektionskorrekturlinse zur Verringerung von solchen Aberrationen, welche durch den schrägen Durchtritt von zu detektierendem Licht durch Grenzflächen des Trennschichtsystems entstehen, umfasst,
    - wobei die mindestens eine Detektionskorrekturlinse (9) als Freiformlinse ausgestaltet ist und zwischen Detektionsobjektiv (7) und Trennschichtsystem angeordnet ist oder die Frontlinse des Detektionsobjektivs (7) bildet,
    - wobei beide Linsenflächen als Freiformflächen ausgestaltet sind, die jeweils eine Bedingung

    $$z(x, y) = \frac{(x^2 + y^2)/R}{1 + \sqrt{1 - (1 + k) \cdot \frac{(x^2 + y^2)}{R^2}}} + \sum_{m,n=0}^{\infty} C_{m,n} x^m y^n$$

    - erfüllen, wobei k die konische Konstante ist, R den Radius einer gedachten Kegelschnittfläche am Scheitelpunkt dieser Fläche bezeichnet, z(x, y) den Abstand der jeweiligen Linsenfläche von einer lotrecht auf der optischen Achse im Scheitelpunkt der Kegelschnittfläche stehenden Ebene in den Koordinaten x und y, und $C_{m,n}$ Koeffizienten eines Polynoms sind, welche nur für gerade m von Null verschieden sind,
    - und wobei jeweils für beide Freiformflächen k, R und die Koeffizienten $C_{m,n}$ in Abhängigkeit vom Medium (2), dem Material der mindestens einen Schicht des Trennschichtsystems und der Dicke der mindestens einen Schicht des Trennschichtsystems vorgegeben sind.

2.  Vorrichtung nach Anspruch 1, **dadurch gekennzeichnet, dass** das Detektionsobjektiv (7) eine Detektionsfokussierungseinrichtung zur Innenfokussierung bei gleichzeitiger Korrektur von bei Fokusänderung auftretenden sphärischen Aberrationen umfasst, wobei die numerische Apertur NA des Detektionsobjektivs (7) bevorzugt mindestens 0,8 beträgt.

3.  Vorrichtung nach Anspruch 2, **dadurch gekennzeichnet, dass** die Detektionsfokussierungseinrichtung mindestens ein erstes im Strahlengang angeordnetes oder in diesen einbringbares adaptives optisches Detektionsfokussierelement zur Innenfokussierung bei gleichzeitiger Korrektur von bei Fokusänderung auftretenden sphärischen Aberrationen umfasst.

4.  Vorrichtung nach Anspruch 3, **dadurch gekennzeichnet, dass** das Detektionsobjektiv (7) eine der Detektionskorrekturlinse (9) nachgeordnete erste Detektionslinsengruppe (11) umfasst, welche ein objektseitiges Bildfeld ins Unendliche abbildet, und eine zweite Detektionslinsengruppe (12), welche bevorzugt afokal ausgebildet ist, und das mindestens eine adaptive optische Detektionsfokussierelement zwischen erster Detektionslinsengruppe (11) und zweiter Detektionslinsengruppe (12) angeordnet ist.

**5.** Vorrichtung nach einem der Ansprüche 1 bis 4, umfassend außerdem ein Beleuchtungskorrekturlinsensystem mit mindestens einer Beleuchtungskorrekturlinse zur Verringerung von solchen Aberrationen, welche durch den schrägen Durchtritt von Beleuchtungslicht durch Grenzflächen des Trennschichtsystems entstehen, wobei die Beleuchtungskorrekturlinse als Freiformlinse ausgestaltet ist und zwischen Beleuchtungsobjektiv (5) und Trennschichtsystem angeordnet ist oder die Frontlinse des Beleuchtungsobjektivs (5) bildet.

**6.** Vorrichtung nach Anspruch 5, **dadurch gekennzeichnet, dass** das Beleuchtungsobjektiv (5) eine Beleuchtungsfokussierungseinrichtung zur Innenfokussierung bei gleichzeitiger Korrektur von bei Fokusänderung auftretenden sphärischen Aberrationen umfasst, wobei die numerische Apertur NA des Beleuchtungsobjektivs (7) bevorzugt höchstens 0,6 beträgt.

**7.** Vorrichtung nach Anspruch 6, **dadurch gekennzeichnet, dass** die Beleuchtungsfokussierungseinrichtung mindestens ein im Strahlengang angeordnetes oder in diesen einbringbares adaptives optisches Beleuchtungsfokussierelement zur Innenfokussierung bei bei gleichzeitiger Korrektur von bei Fokusänderung auftretenden sphärischen Aberrationen umfasst.

**8.** Vorrichtung nach Anspruch 6, **dadurch gekennzeichnet, dass** das Beleuchtungsobjektiv (5) der Beleuchtungskorrekturlinse nachgeordnete erste Beleuchtungslinsengruppe umfasst, welche ein objektseitiges Bildfeld ins Unendliche abbildet, und eine zweite Beleuchtungslinsengruppe, welche bevorzugt afokal ausgebildet ist, und das mindestens eine adaptive optische Beleuchtungsfokussierelement zwischen erster und zweiter Beleuchtungslinsengruppe angeordnet ist.

**9.** Vorrichtung nach einem der Ansprüche 3 bis 8, **dadurch gekennzeichnet, dass** das mindestens eine adaptive optische Detektions- und das mindestens eine Beleuchtungsfokussierelement als Wellenfrontmanipulatoren ausgebildet sind, wobei jeder der Wellenfrontmanipulatoren bevorzugt zwei lateral zur optischen Achse gegeneinander bewegliche Freiformflächen umfasst.

**10.** Vorrichtung nach Anspruch 9, **dadurch gekennzeichnet, dass** zwischen den gegeneinander beweglichen Freiformflächen der Wellenfrontmanipulatoren jeweils ein Immersionsmedium eingebracht ist.

**11.** Vorrichtung nach Anspruch 9 oder 10, **dadurch gekennzeichnet, dass** die optischen Elemente, an welchen die Freiformflächen ausgebildet sind, aus einem Material mit anormaler Teildispersion gefertigt sind und / oder das Immersionsmedium einen von der Normalgeraden abweichenden Dispersionsverlauf aufweist.

**12.** Vorrichtung nach einem der Ansprüche 4 bis 11, **dadurch gekennzeichnet, dass** eine dritte Detektionslinsengruppe der zweiten Detektionslinsengruppe (12) nachgeordnet ist, wenn diese afokal ausgebildet ist, wobei die dritte Detektionslinsengruppe als Tubuslinsengruppe ausgebildet ist und das Detektionsobjektiv (5) ein reelles Zwischenbild erzeugend ausgestaltet ist.

**13.** Vorrichtung nach einem der Ansprüche 9 bis 12, **dadurch gekennzeichnet, dass** die erste Detektionslinsengruppe (11) mit der Detektionskorrekturlinse (9) und die mindestens eine Schicht des Trennschichtsystems bzw. die erste Beleuchtungslinsengruppe mit der Beleuchtungskorrekturlinse und die mindestens eine Schicht des Trennschichtsystems ein optisches System bilden, welches näherungsweise die Bedingung

$$h_1 = f_{FG} \cdot \sin \sigma_0 = n_0 \cdot f'_{FG} \cdot \sin \sigma_0$$

erfüllt, wobei $h_1$ die Einfallshöhe des Öffnungsstrahls am Wellenfrontmanipulator, $\sigma_0$ der Strahlneigungswinkel des Randstrahls gegen die optische Achse, $f_{FG} = -n_0 \cdot f'_{FG}$ die vordere, objektseitige Brennweite der ersten Detektionslinsengruppe (11) und no der Brechungsindex eines Immersionsmediums zwischen Probe (3) und Detektionskorrekturlinse (9) ist.

**14.** Vorrichtung nach Anspruch 13, **dadurch gekennzeichnet, dass** die erste Detektionslinsengruppe (11) und / oder die erste Beleuchtungslinsengruppe eine asphärische Linse umfassen

**Claims**

1. Apparatus for light sheet microscopy, comprising

   - an illumination optical unit comprising an illumination objective (5) for illuminating a sample (3), which is situated in a medium (2) on a sample carrier, with a light sheet via an illumination beam path, wherein the optical axis (6) of the illumination objective (5) and the light sheet lie in a plane which includes an illumination angle (β) that differs from zero with the normal of a horizontal, plane reference surface (4) in respect of which the sample carrier is aligned,
   - a detection optical unit comprising a detection objective (7) in a detection beam path, the optical axis (8) of which includes a detection angle (δ) that differs from zero with the normal of the reference surface (4),
   - a separation layer system comprising at least one layer made of a specified material with a specified thickness, which separates the medium (2) from the illumination objective (5) and the detection objective (7), wherein, by way of a base (9) lying parallel to the reference surface (4), the separation layer system is in contact with the medium (2), at least in the region accessible to the illumination objective (5) and the detection objective (7) for illumination and detection, respectively, **characterized in that**
   - the apparatus comprises a detection correction lens system with at least one detection correction lens for reducing those aberrations arising as a result of the oblique passage of light to be detected through interfaces of the separation layer system,
   - wherein the at least one detection correction lens (9) is configured as a free-form lens and is arranged between detection objective (7) and separation layer system or forms the front lens of the detection objective (7),
   - wherein both lens surfaces are configured as free-form surfaces, which each satisfy a condition

   $$z(x,y) = \frac{(x^2 + y^2)/R}{1 + \sqrt{1 - (1+k) \cdot \frac{(x^2 + y^2)}{R^2}}} + \sum_{m,n=0}^{\infty} C_{m,n} x^m y^n$$

   - where $k$ denotes the conic constant, $R$ denotes the radius of an imagined conic section at the apex of this surface, $z(x,y)$ denotes the distance of the respective lens surface from a plane perpendicular to the optical axis at the apex of the conic section, in coordinates $x$ and $y$, and $Cm,n$ are coefficients of a polynomial and only differ from zero for even m,
   - and wherein, respectively for both free-form surfaces, $k$, $R$ and the coefficients $C_{m,n}$ are predefined on the basis of the medium (2), the material of the at least one layer of the separation layer system and the thickness of the at least one layer of the separation layer system.

2. Apparatus according to Claim 1, **characterized in that** the detection objective (7) comprises a detection focussing device for internal focussing while simultaneously correcting spherical aberrations occurring when the focus changes, wherein the numerical aperture NA of the detection objective (7) is preferably at least 0.8.

3. Apparatus according to Claim 2, **characterized in that** the detection focussing device comprises at least one first adaptive optical detection focussing element, arranged in the beam path or introducible therein, for internal focussing while simultaneously correcting spherical aberrations occurring when the focus changes.

4. Apparatus according to Claim 3, **characterized in that** the detection objective (7) comprises a first detection lens group (11) which is disposed downstream of the detection correction lens (9) and which images an object-side image field to infinity, and comprises a second detection lens group (12), which preferably has an afocal embodiment, and the at least one adaptive optical detection focussing element is arranged between the first detection lens group (11) and second detection lens group (12).

5. Apparatus according to any one of Claims 1 to 4, moreover comprising an illumination correction lens system comprising at least one illumination correction lens for reducing those aberrations arising as a result of the oblique passage of illumination light through interfaces of the separation layer system, wherein the illumination correction lens is configured as a free-form lens and arranged between the illumination objective (5) and the separation layer system or forms the front lens of the illumination objective (5).

6. Apparatus according to Claim 5, **characterized in that** the illumination objective (5) comprises an illumination focussing device for internal focussing while simultaneously correcting spherical aberrations occurring when the focus changes, wherein the numerical aperture NA of the illumination objective (7) is preferably at most 0.6.

7. Apparatus according to Claim 6, **characterized in that** the illumination focussing device comprises at least one first adaptive optical illumination focussing element, arranged in the beam path or introducible therein, for internal focussing while simultaneously correcting spherical aberrations occurring when the focus changes.

8. Apparatus according to Claim 6, **characterized in that** the illumination objective (5) comprises a first illumination lens group which is disposed downstream of the illumination correction lens and which images an object-side image field to infinity, and comprises a second illumination lens group, which preferably has an afocal embodiment, and the at least one adaptive optical illumination focussing element is arranged between first and second illumination lens group.

9. Apparatus according to any one of Claims 3 to 8, **characterized in that** the at least one adaptive optical detection focussing element and the at least one illumination focussing element are embodied as wavefront manipulators, wherein each wavefront manipulator preferably comprises two free-form surfaces that are movable against one another laterally to the optical axis.

10. Apparatus according to Claim 9, **characterized in that** an immersion medium is respectively introduced between the free-form surfaces of the wavefront manipulators that are movable against one another.

11. Apparatus according to Claim 9 or 10, **characterized in that** the optical elements at which the free-form surfaces are formed are manufactured from a material with anomalous partial dispersion and/or the immersion medium has a dispersion curve that deviates from the normal straight line.

12. Apparatus according to any one of Claims 4 to 11, **characterized in that** a third detection lens group is disposed downstream of the second detection lens group (12) if the latter has an afocal embodiment, wherein the third detection lens group is embodied as a tube lens group and the detection objective (5) is configured so as to produce a real intermediate image.

13. Apparatus according to any one of Claims 9 to 12, **characterized in that** the first detection lens group (11) forms an optical system with the detection correction lens (9) and the at least one layer of the separation layer system or the first illumination lens group forms an optical system with the illumination correction lens and the at least one layer of the separation layer system, which optical system approximately satisfies the condition

$$h_1 = f_{FG} \cdot \sin \sigma_0 = n_0 \cdot f'_{FG} \cdot \sin \sigma_0$$

where $h_1$ is the incidence height of the opening ray at the wavefront manipulator, $\sigma_0$ is the beam inclination angle of the marginal ray with respect to the optical axis, $f_{FG} = -n_0 * f'_{FG}$ is the front, object-side focal length of the first detection lens group (11) and $n_0$ is the refractive index of an immersion medium between sample (3) and detection correction lens (9).

14. Apparatus according to Claim 13, **characterized in that** the first detection lens group (11) and/or the first illumination lens group comprise an aspherical lens.

**Revendications**

1. Dispositif de microscopie à lame de lumière, comprenant

   - une optique d'éclairage dotée d'un objectif d'éclairage (5) pour éclairer un échantillon (3) se trouvant sur un porte-échantillon dans un milieu (2), par un trajet optique d'éclairage muni d'une lame de lumière, l'axe optique (6) de l'objectif d'éclairage (5) et la lame de lumière étant situés dans un plan qui forme avec la normale d'une surface de référence (4) plane et horizontale, par rapport à laquelle le porte-échantillon est aligné, un angle d'éclairage (β) différent de zéro,

- une optique de détection dotée d'un objectif de détection (7) sur un trajet optique de détection dont l'axe optique (8) forme avec la normale de la surface de référence (4) un angle de détection (δ) différent de zéro,
- un système de couches de séparation doté d'au moins une couche d'un matériau prédéfini ayant une épaisseur prédéfinie qui sépare le milieu (2) de l'objectif d'éclairage (5) et de l'objectif de détection (7), le système de couches de séparation étant en contact avec le milieu (2) par une surface de base (9) alignée en parallèle à la surface de référence (4) au moins dans la zone accessible à l'objectif d'éclairage (5) et l'objectif de détection (7) pour l'éclairage ou la détection,

**caractérisé en ce que**

- le dispositif comprend un système de lentilles de correction de détection doté d'au moins une lentille de correction de détection pour diminuer des aberrations qui sont créées par le passage oblique d'une lumière à détecter à travers des surfaces limites du système de couches de séparation,
- ladite au moins une lentille de correction de détection (9) étant configurée sous la forme d'une lentille de forme libre et est disposée entre l'objectif de détection (7) et le système de couches de séparation ou constitue la lentille frontale de l'objectif de détection (7),
- les deux surfaces de lentille étant configurées sous la forme de surfaces de forme libre qui satisfont respectivement la condition

$$z(x, y) = \frac{(x^2 + y^2)/R}{1 + \sqrt{1 - (1 + k) \cdot \frac{(x^2 + y^2)}{R^2}}} + \sum_{m,n=0}^{\infty} C_{m,n} x^m y^n$$

- où k est une constante conique, R désigne le rayon d'une surface de section conique au sommet de cette surface, z(x, y) est la distance de la surface de lentille respective d'un plan perpendiculaire à l'axe optique au sommet de la surface de section conique en coordonnées x et y, et $C_{m,n}$ sont des coefficients d'un polynôme qui sont différents de zéro uniquement pour m justement,
- et dans lequel, pour les deux surfaces de forme libre, k, R et les coefficients $C_{m,n}$ sont prédéfinis en fonction du milieu (2), du matériau de ladite au moins une couche du système de couches de séparation et de l'épaisseur de ladite au moins une couche du système de couches de séparation.

2. Dispositif selon la revendication 1, **caractérisé en ce que** l'objectif de détection (7) comprend un dispositif de focalisation de détection pour la focalisation intérieure avec correction simultanée d'aberrations sphériques apparaissant en cas de changement de foyer, l'ouverture numérique NA de l'objectif de détection (7) étant de préférence au moins égale à 0,8.

3. Dispositif selon la revendication 2, **caractérisé en ce que** le dispositif de focalisation de détection comprend au moins un premier élément optique adaptif de focalisation de détection, disposé ou pouvant être placé sur le trajet optique, pour la focalisation intérieure avec correction simultanée d'aberrations sphériques apparaissant en cas de changement de foyer.

4. Dispositif selon la revendication 3, **caractérisé en ce que** l'objectif de détection (7) comprend un premier groupe de lentilles de détection (11) placé en aval de la lentille de correction de détection (9) et qui représente à l'infini un champ d'image côté objet, et un deuxième groupe de lentilles de détection (12) qui est de préférence réalisé de manière afocale, et ledit au moins un élément optique adaptif de focalisation de détection est disposé entre le premier groupe de lentilles de détection (11) et le deuxième groupe de lentilles de détection (12).

5. Dispositif selon l'une quelconque des revendications 1 à 4, comprenant en outre un système de lentilles de correction d'éclairage doté d'au moins une lentille de correction d'éclairage pour diminuer des aberrations qui sont créées par le passage oblique d'une lumière d'éclairage à travers des surfaces limites du système de couches de séparation, la lentille de correction d'éclairage étant configurée sous la forme d'une lentille de forme libre et est disposée entre l'objectif d'éclairage (5) et le système de couches de séparation, ou constitue la lentille frontale de l'objectif d'éclairage (5).

6. Dispositif selon la revendication 5, **caractérisé en ce que** l'objectif d'éclairage (5) comprend un dispositif de focalisation d'éclairage pour la focalisation intérieure avec correction simultanée d'aberrations sphériques apparaissant en cas de changement de foyer, l'ouverture numérique NA de l'objectif d'éclairage (7) étant de préférence égale à 0,6 au maximum.

7. Dispositif selon la revendication 6, **caractérisé en ce que** le dispositif de focalisation d'éclairage comprend au moins un élément optique adaptatif de focalisation d'éclairage, disposé ou pouvant être placé sur le trajet optique, pour la focalisation intérieure avec correction simultanée d'aberrations sphériques apparaissant en cas de changement de foyer.

8. Dispositif selon la revendication 6, **caractérisé en ce que** l'objectif d'éclairage (5) comprend un premier groupe de lentilles d'éclairage placé en aval de la lentille de correction d'éclairage et qui représente à l'infini un champ d'image côté objet, et un deuxième groupe de lentilles d'éclairage qui est de préférence réalisé de manière afocale, et ledit au moins un élément optique adaptatif de focalisation d'éclairage est disposé entre le premier et le deuxième groupe de lentilles d'éclairage.

9. Dispositif selon l'une quelconque des revendications 3 à 8, **caractérisé en ce que** ledit au moins un élément optique adaptatif de détection et ledit au moins un élément optique adaptatif d'éclairage sont réalisés sous la forme de manipulateurs de front d'onde, chacun des manipulateurs de front d'onde comprenant de préférence deux surfaces de forme libre mobiles l'une par rapport à l'autre, latéralement par rapport à l'axe optique.

10. Dispositif selon la revendication 9, **caractérisé en ce qu'**entre les surfaces de forme libre, mobiles l'une par rapport à l'autre, des manipulateurs de front d'onde, respectivement un milieu d'immersion est placé.

11. Dispositif selon la revendication 9 ou 10, **caractérisé en ce que** les éléments optiques, sur lesquels les surfaces de forme libre sont réalisées, sont fabriqués à partir d'un matériau ayant une dispersion partielle anormale et/ou le milieu d'immersion présente une allure de dispersion déviant d'une droite normale.

12. Dispositif selon l'une quelconque des revendications 4 à 11, **caractérisé en ce qu'**un troisième groupe de lentilles de détection est placé en aval du deuxième groupe de lentilles de détection (12) si celui-ci est réalisé de manière afocale, le troisième groupe de lentilles de détection étant réalisé comme un groupe de lentilles tubulaires et l'objectif de détection (5) étant configuré en générant une image intermédiaire réelle.

13. Dispositif selon l'une quelconque des revendications 9 à 12, **caractérisé en ce que** le premier groupe de lentilles de détection (11) doté de la lentille de correction de détection (9) et de ladite au moins une couche du système de couches de séparation, ou le premier groupe de lentilles d'éclairage doté de la lentille de correction d'éclairage et de ladite au moins une couche du système de couches de séparation constituent un système optique qui satisfait approximativement la condition

$$h_1 = f_{FG} \cdot sin\sigma_0 = n_0 \cdot f'_{FG} \cdot sin\sigma_0$$

où $h_1$ est la hauteur d'incidence du rayon d'ouverture sur le manipulateur de front d'onde, $\sigma_0$ est l'angle d'inclinaison de rayon du rayon marginal par rapport à l'axe optique, $f_{FG}= -n_0 * f'_{FG}$ est la distance focale avant, côté objet, du premier groupe de lentilles de détection (11), et $n_0$ est l'indice de réfraction d'un milieu d'immersion entre l'échantillon (3) et la lentille de correction de détection (9).

14. Dispositif selon la revendication 13, **caractérisé en ce que** le premier groupe de lentilles de détection (11) et/ou le premier groupe de lentilles d'éclairage comprennent une lentille asphérique.

EP 3 069 187 B1

Fig.1

22

Fig.2a

Fig.2b

Fig.2c

Fig.3a

Fig.3b

Fig.3c

Fig.4a

Fig.4b

Fig.4c

Fig.5a

Fig.5b

Fig.5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0866993 B1
- DE 10257423 A1
- WO 2004053558 A1
- WO 2012110488 A2
- WO 2012122027 A2
- DE 102013107297
- US 2004173760 A1
- WO 0210833 A1
- WO 2015004107 A1
- DE 102012101262 B3

**In der Beschreibung aufgeführte Nicht-Patentliteratur**

- **J. HUISKEN et al.** Selective Plane Illumination Microscopy Techniques in Developmental Biology. *Zeitschrift Development,* 2009, vol. 336, 63